# EUROPEAN PATENT APPLICATION

(11) **EP 4 459 215 A1**
(43) Date of publication of application: **06.11.2024**
(21) Application number: 23749685.6
(22) Date of filing: 27.01.2023
(51) Int. Cl.: F28F 3/08, F24F 1/0007, F24F 1/037, F24F 5/00, F24F 13/22, F28D 9/00, F28F 25/06

(54) **AIR CONDITIONER**

(30) Priority: 03.02.2022 JP 2022015786; 03.02.2022 JP 2022015787; 03.02.2022 JP 2022015788
(71) Applicant: BROTHER KOGYO KABUSHIKI KAISHA, Nagoya-shi, Aichi 467-8561 (JP)
(72) Inventor: OCHIAI, Yusuke, Nagoya-shi, Aichi 467-8562 (JP); SAKANO, Yuji, Nagoya-shi, Aichi 467-8562 (JP); YOSHIDA, Shigeki, Nagoya-shi, Aichi 467-8562 (JP); MATSUMOTO, Daiki, Nagoya-shi, Aichi 467-8562 (JP); SATO, Ryosuke, Nagoya-shi, Aichi 467-8562 (JP)
(74) Representative: Prüfer & Partner mbB Patentanwälte · Rechtsanwälte
(86) International application number: PCT/JP2023/002622
(87) International publication number: WO 2023/149369

(57) **Abstract**

Provided is an air conditioner with improved cooling capacity. The air conditioner includes a sensible heat exchanger, an exchanger water supply, an exhaust-air evaporative filter, and a filter water supply. The sensible heat exchanger includes a supply air channel and an exhaust air channel. The exchanger water supply supplies water to the exhaust air channel of the sensible heat exchanger. The exhaust-air evaporate filter is for exhaust air to pass through. The exhaust-air evaporate filter is located upstream of the sensible heat exchanger in a flow direction of exhaust air flowing through the exhaust air channel of the sensible heat exchanger. The filter water supply supplies water to the exhaust-air evaporate filter.

## Description

### TECHNICAL FIELD

The present invention relates to an air conditioner.

### BACKGROUND

A known evaporative cooling type air conditioner draws in air in a room, lowers the ambient temperature using heat of evaporation of water, and blows the cooled air into the room (for example, Patent Literature 1). In the air conditioner of Patent Literature 1, air flowing through a second flow passage passes through a plurality of tubes included in the sensible heat exchanger, and air flowing through a first flow passage passes around the plurality of tubes. As a result, heat is exchanged between the air flowing through the second flow passage and the air flowing through the first flow passage.

### Citation List

### Patent Literature

[Patent Literature 1] Japanese Laid-Open Patent Publication No. 2014/092338

### SUMMARY

### Technical Problem

However, in the air conditioner of Patent Literature 1, no consideration is given to further improvement of the cooling capacity.

The present invention has been made in view of such circumstances, and an object of the present invention is to provide an air conditioner with improved cooling capacity.

### Solution to Problem

An air conditioner according to an aspect of the present disclosure includes a sensible heat exchanger, an exchanger water supply, an exhaust-air evaporative filter, and a filter water supply. The sensible heat exchanger includes a supply air channel and an exhaust air channel. The exchanger water supply supplies water to the exhaust air channel of the sensible heat exchanger. The exhaust-air evaporate filter is for exhaust air to pass through. The exhaust-air evaporate filter is located upstream of the sensible heat exchanger in a flow direction of exhaust air flowing through the exhaust air channel of the sensible heat exchanger. The filter water supply supplies water to the exhaust-air evaporate filter.

### Advantageous Effects of Invention

An air conditioner with improved cooling capacity is provided.

### BRIEF DESCRIPTION OF THE DRAWINGS

FIG. 1 is a schematic side sectional view illustrating an example configuration of an air conditioner according to an embodiment.
FIG. 2 is a perspective external view of the air conditioner.
FIG. 3 is a schematic side cross-sectional view illustrating an example configuration of an evaporative filter unit.
FIG. 4 is a schematic perspective view illustrating an example configuration of an upper surface of a partition.
FIG. 5 is a schematic perspective view illustrating an example configuration of a lower surface of the partition.
FIG. 6 is a schematic perspective view illustrating an example configuration of a sensible heat exchanger.
FIG. 7 is a schematic perspective view illustrating an example configuration of a basic set.
FIG. 8 is a schematic perspective view illustrating an example configuration of the arrangement between exchanger water supplies and the sensible heat exchanger.
FIG. 9 is a block diagram illustrating functional components in the air conditioner.
FIG. 10 is an explanatory view exemplifying a timing chart in driving of a pump.
FIG. 11 is a flowchart illustrating steps by a controller mounted on a substrate.
FIG. 12 is a schematic perspective view illustrating an example configuration of spacers according to a second embodiment.
FIG. 13 is a schematic side sectional view illustrating an air conditioner according to a third embodiment.

### DETAILED DESCRIPTION

An air conditioner according to an embodiment of the present disclosure will be described with reference to the drawings. The present disclosure is not limited to the following examples, and includes meanings equivalent to the scope of the claims and all modifications within the scope of the claims.

### First Embodiment

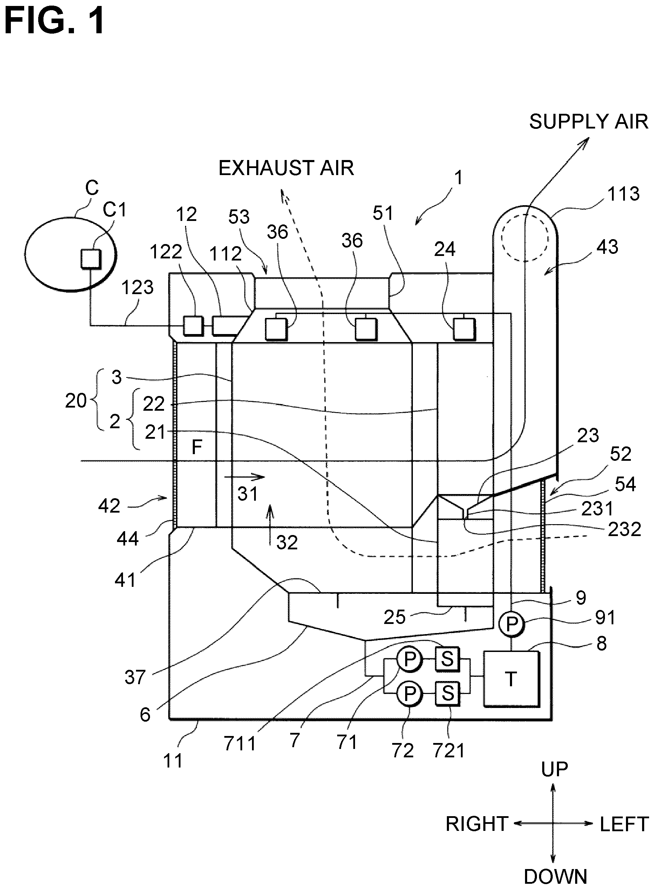

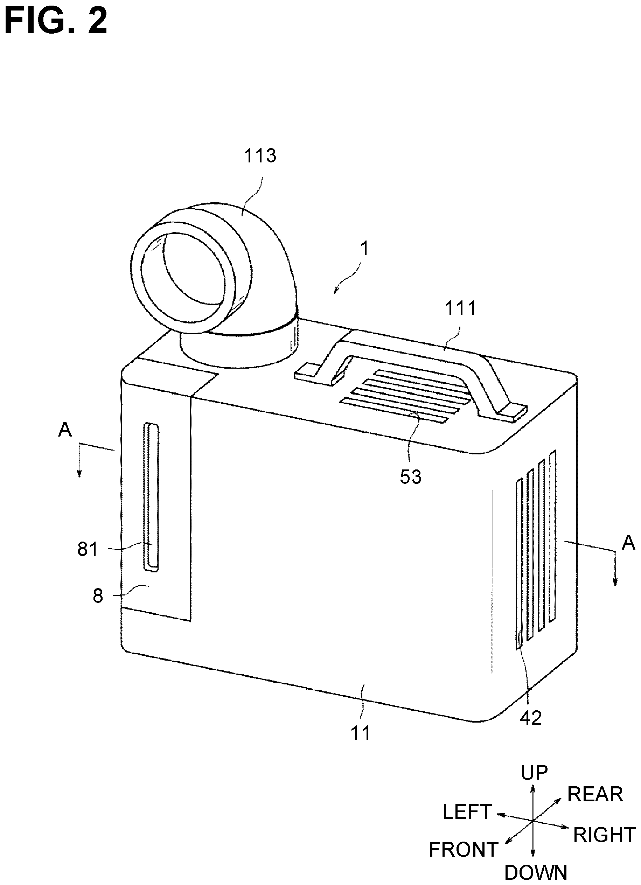

Hereinafter, an embodiment will be described with reference to the drawings. FIG. 1 is a schematic side sectional view illustrating an example configuration of an air conditioner 1 according to an embodiment. FIG. 2 is a perspective external view of the air conditioner 1. FIG. 1 is a schematic diagram showing a cross section taken along the line A-A in FIG. 2 from the rear surface. Therefore, in FIG. 2, the air conditioner 1 is shown from the front surface, and the left and right directions, which are determined with respect to the front surface, are opposite to the left and right directions in FIG. 1 illustrating the air conditioner 1 from the rear surface. In FIG. 1, directional terms, up, down, left, and right, are shown based on the air conditioner 1 placed in a normal usage mode. In FIG. 2, directional terms, up, down, front, rear, left, and right, are shown based on the air conditioner 1 placed in the normal usage mode.

The air conditioner 1 is mounted on a vehicle C, for example, a commercial vehicle such as a truck, a towing vehicle, an aerial work platform, a mini excavator car, or a golf cart. The air conditioner 1 includes a box-shaped housing 11, and is electrically connected to a power supply unit C 1 such as a cigar socket provided in the vehicle C, for example, by a cable 123 extending from an outer surface of the housing 11. The cable 123 is connected to a power receiver 122 provided inside the housing 11. Therefore, the air conditioner 1 is driven by receiving electric power supplied from the battery of the vehicle C via the cable 123, thereby cooling the space around the driver of the vehicle C as a space to be air-conditioned.

The air conditioner 1 may be installed indoors in a factory. In this case, the air conditioner 1 may be driven using electric power supplied from gird power or electric power supplied from a secondary battery such as a lithium-ion battery housed in the housing 11. The secondary battery may be provided outside the housing 11.

The housing 11 is a rectangular box made of resin or metal, and is provided with a handle 111 to be held by a user when the user carries the air conditioner 1. The housing 11 may be provided with a shoulder strap used when the user carries the air conditioner 1.

A duct 113 for blowing out supply air is provided in the upper surface of the housing 11. A water supply tank 8 is provided in the front surface of the housing 11. The water supply tank 8 is detachably fitted to the housing 11. Therefore, when refilling the water supply tank 8, the user of the air conditioner 1 can bring only the water supply tank 8 to a tap, thereby reducing the workload involved in refilling with water. The water supply tank 8 has a water level confirmation window 81 in a side surface thereof. The user can visually recognize the amount of water remaining in the water supply tank 8 through the water level confirmation window 81. The water supply tank 8 may be formed integrally with the housing 11 and may not be removable from the housing 11.

The air conditioner 1 includes a water supply tank 8 for storing water, and a cooling unit 20 including an evaporative filter unit 2 and a sensible heat exchanger 3, which are to be supplied with water from the water supply tank 8. The evaporative filter unit 2 lowers the ambient temperature by using heat of evaporation of water supplied from the water supply tank 8 and cools the space to be air-conditioned. The evaporative filter unit 2 includes an exhaust-air evaporative filter 21, which is an evaporative filter through which exhaust air passes, and a supply-air evaporative filter 22, which is an evaporative filter through which supply air passes. The evaporative filter unit 2 is not limited to the case of including the exhaust-air evaporative filter 21 and the supply-air evaporative filter 22, and may be configured to include only the exhaust-air evaporative filter 21. Further, the sensible heat exchanger 3 uses sensible heat and latent heat of water supplied from the water supply tank 8 to lower the ambient temperature and cool the space to be air-conditioned. The exhaust-air evaporative filter 21 is located upstream of the sensible heat exchanger 3 in a flow direction of exhaust air. That is, the exhaust-air evaporative filter 21 is located between the sensible heat exchanger 3 and an exhaust air inlet 52 for drawing in exhaust air from the outside of the air conditioner 1, in a direction orthogonal to a direction in which a filter water supply 24 and the evaporative filter unit 2 are arranged. The supply-air evaporative filter 22 is located downstream of the sensible heat exchanger 3 in a flow direction of supply air. That is, the supply-air evaporative filter 22 is located between the sensible heat exchanger 3 and a supply air outlet 43 for blowing out exhaust air outside the air conditioner 1, in a direction orthogonal to a direction in which the filter water supply 24 and the evaporative filter unit 2 are arranged. Details of the evaporative filter unit 2 and the sensible heat exchanger 3 will be described later.

The housing 11 is provided with supply air inlets 42 for drawing in air in the space to be air-conditioned, and the exhaust air inlet 52. The supply air inlets 42 are provided in the right surface of the housing 11, and the exhaust air inlet 52 is provided in the left surface of the housing 11. The supply air inlets 42 and the exhaust air inlet 52 are each provided in one of two opposite side surfaces of the housing 11.

The housing 11 is provided with a supply air outlet 43 and exhaust air outlets 53. Air that has passed through the sensible heat exchanger 3 and the supply-air evaporative filter 22 undergoes two-stage cooling processes. The air is cooled by the sensible heat exchanger 3 and the supply-air evaporative filter 22, and is blown out through the supply air outlet 43 into the space to be air-conditioned as supply air. In addition, air that has passed through the exhaust-air evaporative filter 21 and the sensible heat exchanger 3 undergoes two-stage cooling process. The air is cooled by water supplied to the exhaust-air evaporative filter 21 and the sensible heat exchanger 3. The air undergoes sensible heat exchange with supply air in the sensible heat exchanger 3, and is blown out of the air conditioner 1 through the exhaust air outlets 53 as exhaust air. The supply air outlet 43 is formed in a left portion of the upper surface of the housing 11. The duct 113 is disposed above the supply air outlet 43, and the duct 113 communicates with the supply air outlet 43. The exhaust air outlets 53 are formed in a right portion of the upper surface of the housing 11.

The supply air inlets 42 and the supply air outlet 43 communicate with each other. The supply air inlets 42 as an entrance for supply air and the supply air outlet 43 as an outlet for supply air define a supply-air flow passage through which air flows to become supply air. That is, supply air flows into the supply-air flow passage through the supply air inlets 42 and flows out through the supply air outlet 43. The supply air inlets 42 are covered with a supply air dust collecting filter 44 for collecting dust in supply air drawn in through the supply air inlets 42.

The exhaust air inlet 52 and the exhaust air outlets 53 communicate with each other. The exhaust air inlet 52 as an entrance for exhaust air and the exhaust air outlets 53 as an outlet for exhaust air define an exhaust-air flow passage through which air flows to become exhaust air. That is, exhaust air flows into the exhaust-air flow passage through the exhaust air inlet 52 and flows out through the exhaust air outlets 53. The exhaust air inlet 52 is covered with an exhaust-air dust collecting filter 54 for collecting dust in exhaust air drawn in through the exhaust air inlet 52.

The air conditioner 1 includes fans for conveying supply air and exhaust air. The fans includes a supply fan 41 for conveying supply air, and an exhaust fan 51 for conveying exhaust air. The supply fan 41 and the exhaust fan 51 may be, for example, axial flow fans such as propeller fans or sirocco fans. The supply fan 41 is located in the vicinity of the supply air inlets 42 and upstream of the sensible heat exchanger 3 in the flow direction of supply air in the supply-air flow passage, and functions as a push-out fan to push air with force. The supply air dust collecting filter 44 for collecting dust in supply air drawn in through the supply air inlets 42 is located between the supply fan 41 and the supply air inlets 42 in the flow direction of supply air in the supply-air flow passage.

The exhaust fan 51 is located in the vicinity of exhaust air outlets 53 and downstream of the sensible heat exchanger 3 in the flow direction of exhaust air in the exhaust-air flow passage, and functions as a suction fan. The supply fan 41 and the exhaust fan 51 are not limited to these aspects, and both may be either a push-out fan or a suction fan.

Exhaust air conveyed by the exhaust fan 51 is drawn in through the exhaust air inlet 52, passes through the exhaust-air evaporative filter 21 located between the exhaust air inlet 52 and the sensible heat exchanger 3, and then flows into an exhaust air channel 32 of the sensible heat exchanger 3. The exhaust-air evaporative filter 21 is formed from a rayon polyester material or nonwoven fabric. The supply-air evaporative filter 22 is located above the exhaust-air evaporative filter 21, and a plate-shaped partition 23 is located between the supply-air evaporative filter 22 and the exhaust-air evaporative filter 21. The partition 23 has on its lower surface a plurality of protrusions 231 each protruding toward the supply-air evaporative filter 22 and having one of a plurality of communication holes 232. Water is supplied from the filter water supply 24, which is located above the supply-air evaporative filter 22. Any water that does not evaporate as it passes through the supply-air evaporative filter 22 then falls in drops through the communication holes 232 in the partition 23 onto the exhaust-air evaporative filter 21. The filter water supply 24 is a water supply to supply water to the supply-air evaporative filter 22 and the exhaust-air evaporative filter 21. The exhaust-air evaporative filter 21 has water absorbency, and water supplied from the filter water supply 24 permeates the entire surface of the exhaust-air evaporative filter 21, thereby promoting evaporation of water. A filter drain pan 25 is located below the exhaust-air evaporative filter 21. The filter drain pan 25 is a drain pan that receives water supplied from the filter water supply 24 and passing through the supply-air evaporative filter 22 and the exhaust-air evaporative filter 21. In addition, a common drain pan 6 is located below the filter drain pan 25.

The sensible heat exchanger 3 is provided with a supply air channel 31, through which supply air flows, and an exhaust air channel 32, through which exhaust air flows. As described above, the air conditioner 1 is provided with the supply-air flow passage, through which supply air flows, and the exhaust-air flow passage, through which exhaust air flows, as air flow passages. The supply air channel 31 of the sensible heat exchanger 3 constitutes a part of the supply-air flow passage, and the exhaust air channel 32 of the sensible heat exchanger 3 constitutes a part of the exhaust-air flow passage.

As will be described in detail later, the supply air channel 31 and the exhaust air channel 32 in the sensible heat exchanger 3 are defined by a plurality of resin plates each having a hollow structure, and these plates stacked in parallel constitute the sensible heat exchanger 3. Using thin resin plates in the sensible heat exchanger 3 improves heat transfer performance and reduces its weight. The hollow structure may be constituted by a metal plate.

The resin plates are stacked such that the supply air channel 31 and the exhaust air channel 32 are provided perpendicularly to each other, and sensible heat exchange between supply air and exhaust air is performed via the resin plates. The stacking direction of the stacked resin plates is perpendicular to an extending direction of each of the supply air channel 31 and the exhaust air channel 32. That is, in the present embodiment, the extending direction of the supply air channel 31 is from left to right, and the extending direction of the exhaust air channel 32 is from bottom to top, whereas the stacking direction is the front-rear direction perpendicular to both the left-right direction and the up-down direction. Since the supply air channel 31 and the exhaust air channel 32 are orthogonal to each other as described above, supply air flowing through the supply air channel 31 and exhaust air flowing through the exhaust air channel 32 form crossflow.

An entrance to the supply air channel 31 and an outlet therefrom are each provided in one of two opposite side surfaces of the sensible heat exchanger 3. In the illustration of the present embodiment, the entrance to the supply air channel 31 is provided on the right surface of the sensible heat exchanger 3, and an outlet from the supply air channel 31 is provided on the left surface of the sensible heat exchanger 3.

The supply air channel 31 is defined by stacked spaces communicating with each other from the entrance to the supply air channel 31 toward the outlet from the supply air channel 31. An entrance to the exhaust air channel 32 is provided in a lower surface of the sensible heat exchanger 3, and an outlet from the exhaust air channel 32 is provided in an upper surface thereof. The exhaust air channel 32 is defined by stacked spaces each extending from the entrance to the exhaust air channel 32 toward the outlet from the exhaust air channel 32. Exhaust air, cooled through the exhaust-air evaporative filter 21, flows into the entrance to the exhaust air channel 32.

A box-shaped exchanger drain pan 37 having an opening at the top is located below the sensible heat exchanger 3. As will be described later, the exchanger drain pan 37 is a drain pan that receives water supplied from exchanger water supplies 36 and passing through the sensible heat exchanger 3. The exchanger drain pan 37 is located upstream of the sensible heat exchanger 3 in the flow direction of exhaust air with its opening facing the lower surface of the sensible heat exchanger 3. The exhaust air drawn in and conveyed through the exhaust air inlet 52 by the exhaust fan 51 and passing through the exhaust-air evaporative filter 21 passes through a space sandwiched between the box-shaped exchanger drain pan 37 having an open upper surface and the sensible heat exchanger 3, and flows into the exhaust air channel 32 from the entrance to the exhaust air channel 32 provided on the lower surface of the sensible heat exchanger 3. That is, the exchanger drain pan 37 defines a part of the exhaust-air flow passage. The exhaust air passing through a space between the exchanger drain pan 37 and the sensible heat exchanger 3, which define a part of the exhaust-air flow passage, is further cooled by the water received by the exchanger drain pan 37. The common drain pan 6 is further located below the exchanger drain pan 37. In the present embodiment, the exhaust air passes through the space between the exchanger drain pan 37 and the sensible heat exchanger 3. However, the exhaust air may flow into the exhaust air channel 32 without passing through the space between the exchanger drain pan 37 and the sensible heat exchanger 3.

The exhaust air that has passed through the exhaust air channel 32 of the sensible heat exchanger 3 passes through a space in which the exchanger water supplies 36, which supply water to the exhaust air channel 32, are provided, is drawn in by the exhaust fan 51 and blown out through the exhaust air outlets 53. The exchanger water supplies 36 are water supplies to supply water to the sensible heat exchanger 3. Details of the exchanger water supplies 36 will be described later.

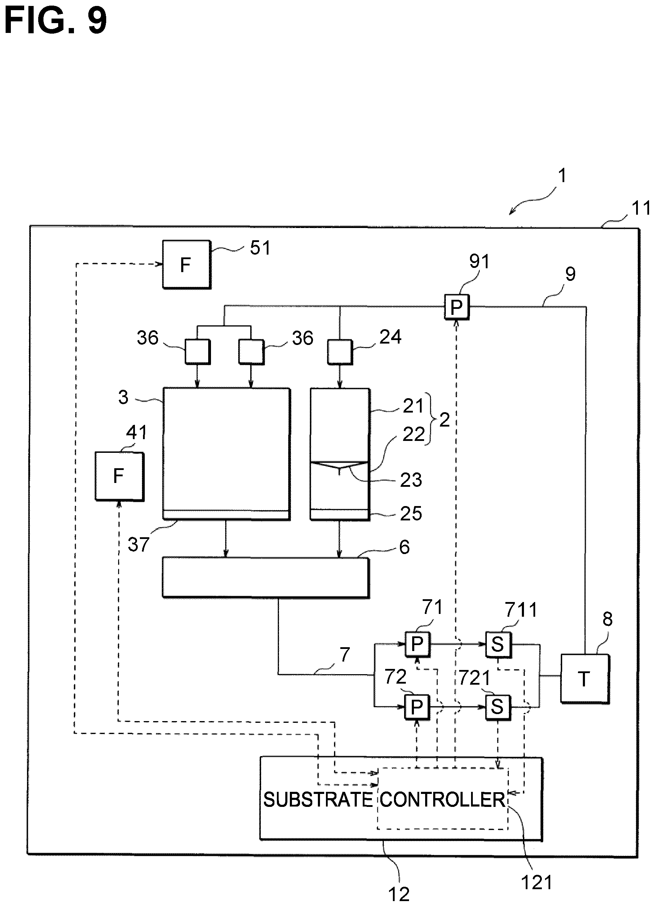

The sensible heat exchanger 3 has a wall surface 112 that defines a portion of the exhaust-air flow passage, which is downstream of the exhaust air channel 32 in the flow direction of exhaust air. The wall surface 112 is thermally connected with a substrate 12, on which a controller 121 (refer to FIG. 9) for controlling the air conditioner 1 is mounted. The wall surface 112 thermally connected with the substrate 12 may be configured by a partition plate for separating a space in which the exchanger water supplies 36 are provided from a space in which the substrate 12 is disposed. Alternatively, the wall surface 112 thermally connected with the substrate 12 may be an outer surface of a fan casing that forms an outer shell of the exhaust fan 51. Since the exhaust air, which is cooled by heat of evaporation of water from the exhaust-air evaporative filter 21 and the exchanger water supplies 36, flows through the portion of the exhaust-air flow passage, which is downstream of the exhaust air channel 32 of the sensible heat exchanger 3, the substrate 12 is cooled by the exhaust air. The present embodiment shows, but is not limited to, that the substrate 12 is thermally connected with the wall surface 112 defining the exhaust-air flow passage. The substrate 12 may be located away from the vicinity of the exhaust-air flow passage.

In the example of the present embodiment shown in FIG. 1, the supply air channel 31 through which supply air flows is provided linearly from the right surface to the left surface of the sensible heat exchanger 3. The supply-air evaporative filter 22 is located downstream of the outlet from the supply air channel 31 in the flow direction of supply air. The supply-air evaporative filter 22 is located in the supply-air flow passage between the sensible heat exchanger 3 and the supply air outlet 43.

The supply-air evaporative filter 22 is located such that one rectangular surface thereof faces the left surface of the sensible heat exchanger 3 provided with the outlet from the supply air channel 31. The supply-air evaporative filter 22 thus functions as a cooling element. The supply-air evaporative filter 22 is formed from a rayon polyester material or nonwoven fabric, similarly to the exhaust-air evaporative filter 21. The filter water supply 24 having water supply holes is located above the supply-air evaporative filter 22. The supply-air evaporative filter 22 has water absorbency, and water supplied from the filter water supply 24 permeates the entire surface of the supply-air evaporative filter 22, thereby promoting evaporation of water. The supply-air evaporative filter 22 is located in a portion of the supply-air flow passage, which is downstream of the supply fan 41 in the flow direction of supply air. Therefore, the pressure in the supply-air evaporative filter 22 is higher than the atmospheric pressure. The supply-air flow passage extends from the supply-air evaporative filter 22 upward to the supply air outlet 43.

Supply air flowing out from the supply air channel 31 of the sensible heat exchanger 3 passes through the supply-air evaporative filter 22 and is blown out through the supply air outlet 43 to the space to be air-conditioned. The supply air flowing out from the outlet from the supply air channel 31 is primarily cooled by the exhaust air through the sensible heat exchanger 3, and is secondarily cooled through the supply-air evaporative filter 22, whereby the supply air is cooled in two stages. Therefore, the temperature of the supply air is further lowered as compared with a direct evaporation method that uses, for example, only the supply-air evaporative filter 22.

As described above, the air conditioner 1 includes the evaporative filter unit 2, which includes the exhaust-air evaporative filter 21 and the supply-air evaporative filter 22, and the water supply tank 8, which stores water to be supplied to the sensible heat exchanger 3. The water supply tank 8 and the common drain pan 6, which communicates with the exchanger drain pan 37 and the filter drain pan 25, communicate with a water collecting channel 7 for collecting the residual water of the sensible heat exchanger 3 and the residual water of the evaporative filter unit 2. The present embodiment shows, but is not limited to, that the air conditioner 1 includes the exchanger drain pan 37, the filter drain pan 25, and the common drain pan 6. The air conditioner 1 may include a single drain pan to receive the residual water of the sensible heat exchanger 3 and the residual water of the evaporative filter unit 2.

The water collecting channel 7 includes a parallel water channel branching into two, and the parallel water channel includes a water collecting channel provided with the first collection pump 71 and a first flow rate sensor 711 and a water collecting channel provided with the second collection pump 72 and a second flow rate sensor 721. Therefore, the first collection pump 71 and the second collection pump 72 are connected in parallel. The first flow rate sensor 711 is connected in series to the first collection pump 71, and detects the flow rate of water that is conveyed by the first collection pump 71. The second flow rate sensor 721 is connected in series to the second collection pump 72, and detects the flow rate of water that is conveyed by the second collection pump 72. When the first collection pump 71 and the second collection pump 72 are driven, water accumulating in the common drain pan 6 is conveyed through the water collecting channel 7, and collected and stored in the liquid supply tank 8. Since at least one of the first collection pump 71 and the second collection pump 72 is provided, water accumulating in the common drain pan 6 can be reliably collected in the water supply tank 8 compared to a structure in which water is collected by gravity. This structure enables water to be conveyed to a position higher than the common drain pan 6. Therefore, the position of the water supply tank 8 can be freely chosen, increasing the flexibility in designing the air conditioner 1. The present embodiment shows, but is not limited to, that unevaporated water is collected in the water supply tank 8. Unevaporated water may be discarded.

Water collected in the water supply tank 8 is supplied to the evaporative filter unit 2 and the sensible heat exchanger 3 through a supply water channel 9. A water supply pump 91 is provided in the supply water channel 9. When the water supply pump 91 is driven, water in the water supply tank 8 is supplied to the filter water supply 24, which is disposed above the evaporative filter unit 2, and the exchanger water supplies 36, which are disposed above the sensible heat exchanger 3. The supply water channel 9, which is located downstream of the water supply pump 91 n a water supply direction, branches in accordance with the combined total of the filter water supply 24 and the exchanger water supplies 36, and the branches of the supply water channel 9 each communicate with the filter water supply 24 and the exchanger water supplies 36, respectively. The supply water channel 9 may branch off through, for example, a three-way valve, and may be configured such that the volumetric flow rate of the exchanger water supplies 36 is larger than that of the filter water supply 24. For example, the volumetric flow rate of the exchanger water supplies 36 may be 0.4 L/min, and the volumetric flow rate of the filter water supply 24 may be 0.1 L/min. This increases the amount of water for cooling the exhaust air by sensible heat in the sensible heat exchanger 3 while controlling the amount of water vapor blown out to the space to be air-conditioned together with the supply air, thus further improving cooling efficiency in the cooling unit 20.

The cooling unit 20 and the water supply tank 8 communicate with each other through the supply water channel 9 and the water collecting channel 7, thereby forming circulation water channels for circulating water between the cooling unit 20 and the water supply tank 8. The circulation water channels are constituted in parallel by an evaporative filter unit 2-based circulation water channel, which is made up of the water supply tank 8, the supply water channel 9, the evaporative filter unit 2, and the water collecting channel 7, and a sensible heat exchanger 3-based circulation water channel, which is made up of the water supply tank 8, the supply water channel 9, the sensible heat exchanger 3 and the water collecting channel 7.

As described above, the supply air dust collecting filter 44 and the exhaust air dust collecting filter 54 are provided covering the supply air inlets 42 and the exhaust air inlet 52, respectively, and the housing 11 has a structure in which dust is unlikely to enter. As a result, the water supplied to the cooling unit 20 repeatedly through the circulation water channels is kept clean.

A heat insulating member may be attached to the outer peripheral surface of the water supply tank 8. As described above, water collected from the evaporative filter unit 2 and the sensible heat exchanger 3 is stored in the water supply tank 8, and the water is cooled by heat of evaporation. The heat insulating member on the outer peripheral surface of the water supply tank 8 can reduce heat exchange between the water that is collected from the evaporative filter unit 2 and the sensible heat exchanger 3 and the ambient air around the water supply tank 8. As a result, an increase in the water temperature in the water supply tank 8 is prevented. Similarly, the heat insulating member may be attached to the outer peripheral surface of each of the filter drain pan 25, the exchanger drain pan 37, the common drain pan 6, the water collecting channel 7, and the supply water channel 9.

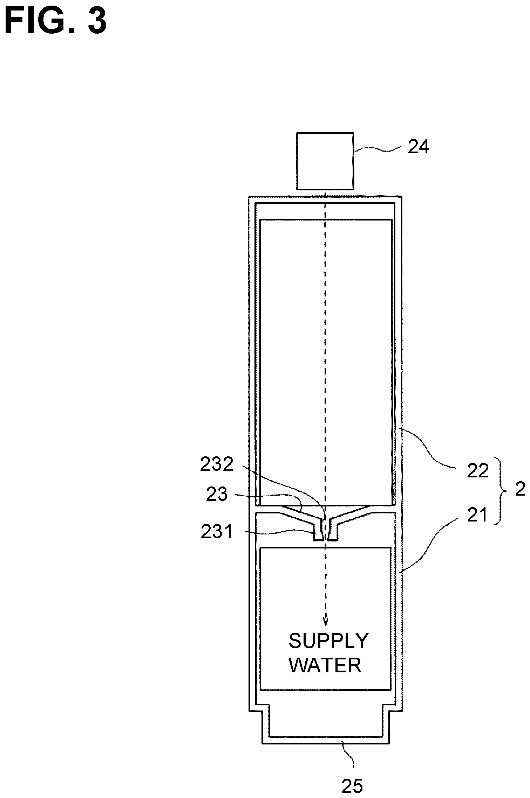

FIG. 3 is a schematic side cross-sectional view illustrating an example configuration of the evaporative filter unit 2. Water supplied from the filter water supply 24 falls in drops onto the evaporative filter unit 2. As described above, the evaporative filter unit 2 includes the exhaust-air evaporative filter 21 and the supply-air evaporative filter 22, and the supply-air evaporative filter 22 is located above the exhaust-air evaporative filter 21. In other words, the supply-air evaporative filter 22 is located between the filter water supply 24 and the exhaust-air evaporative filter 21. Therefore, water supplied from the filter water supply 24, which is located above the evaporative filter unit 2, falls in drops onto the supply-air evaporative filter 22 and permeates into the supply-air evaporative filter 22. The water that has permeated into the supply-air evaporative filter 22 is evaporated by the supply air passing through the supply-air evaporative filter 22, and cools the supply air by receiving, from the supply air, latent heat of evaporation.

The plate-like partition 23 having communication holes 232 is located between the supply-air evaporative filter 22 and the exhaust-air evaporative filter 21 that are vertically arranged. The water that has passed through the supply-air evaporative filter 22 without evaporating falls in drops from the communication holes 232 of the partition 23 onto the exhaust-air evaporative filter 21 and permeates into the exhaust-air evaporative filter 21. The water that has permeated into the exhaust-air evaporative filter 21 is evaporated by the exhaust air passing through the exhaust-air evaporative filter 21, and cools the exhaust air by receiving, from the exhaust air, latent heat of evaporation.

The filter drain pan 25 is located below the exhaust-air evaporative filter 21. The water that has passed through the exhaust-air evaporative filter 21 without evaporating flows into and is temporarily received by the filter drain pan 25, and then flows into the common drain pan 6.

Both the exhaust-air evaporative filter 21 and the supply-air evaporative filter 22 may have a rectangular plate shape, and the volume of the supply-air evaporative filter 22 may be larger than that of the exhaust-air evaporative filter 21. In a case where the volume of the supply-air evaporative filter 22 is larger than that of the exhaust-air evaporative filter 21, the amount of water retained in the supply air-evaporative filter 22 can be larger than that in the exhaust-air evaporative filter 21. This increases the efficiency of the cooling process for the supply air passing through the supply-air evaporative filter 22, thus improving the cooling capacity of the air conditioner 1.

In the evaporative filter unit 2, the supply-air evaporative filter 22 and the exhaust-air evaporative filter 21 are arranged in this order downward from the filter water supply 24, so that the water supplied from the filter water supply 24 falls in drops onto the supply-air evaporative filter 22 and the exhaust-air evaporative filter 21 by gravity. That is, the single filter water supply 24 can be shared by the supply-air evaporative filter 22 and the exhaust-air evaporative filter 21. This shared use reduces the number of components mounted on the air conditioner 1, which leads to a smaller housing size, a lighter product weight due to space savings, and lower product costs. The supply-air evaporative filter 22 and the exhaust-air evaporative filter 21 are arranged vertically below the filter water supply 24. The supply-air evaporative filter 22 and the exhaust-air evaporative filter 21 are thus located along a supply direction of water supplied from the filter water supply 24. Therefore, when water is supplied to both the supply-air evaporative filter 22 and the exhaust-air evaporative filter 21, water can be efficiently circulated between the supply-air evaporative filter 22 and the exhaust-air evaporative filter 21. In addition, gravity can be used to cause the water to flow from the supply-air evaporative filter 22 to the exhaust-air evaporative filter 21, thus improving the energy efficiency of the air conditioner 1.

The present embodiment shows, but is not limited to, that the supply-air evaporative filter 22 and the exhaust-air evaporative filter 21 share the single filter water supply 24. However, individual filter water supplies 24 may be provided for the supply-air evaporative filter 22 and the exhaust-air evaporative filter 21. In this case, the supply-air evaporative filter 22 and the exhaust-air evaporative filter 21 may not be arranged vertically, and may be provided in the housing 11 so as to be spaced from each other. Alternatively, the evaporative filter unit 2 may be configured such that the exhaust-air evaporative filter 21 is located above the supply-air evaporative filter 22.

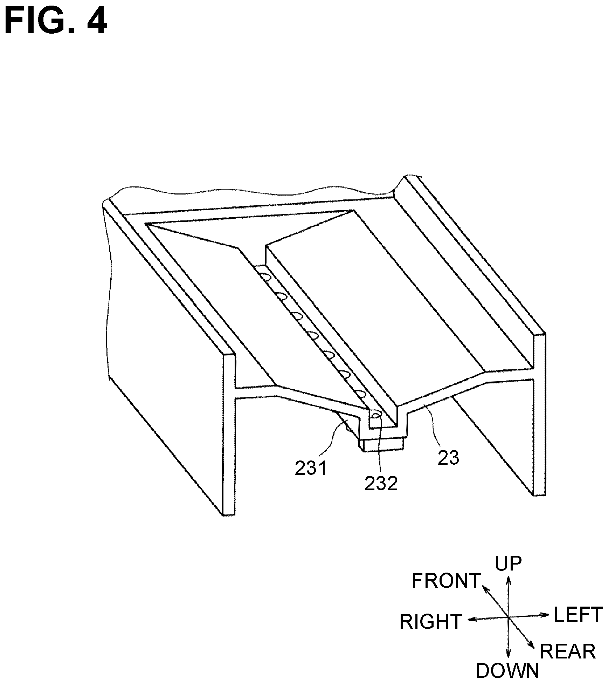

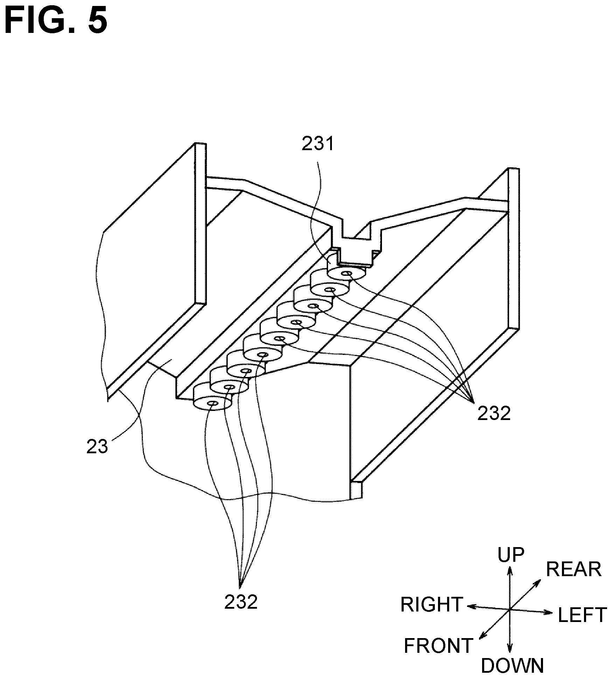

FIG. 4 is a schematic perspective view illustrating an example configuration of the upper surface of the partition 23. FIG. 5 is a schematic perspective view illustrating an example configuration of the lower surface of the partition 23. The partition 23, which is located between the supply-air evaporative filter 22 and the exhaust-air evaporative filter 21, functions as a partition plate (refer to FIG. 3). The partition 23 may be integrally formed with a frame body as a part of the frame body that houses the supply-air evaporative filter 22 and the exhaust-air evaporative filter 21, or may be formed as a plate member that is separate from the frame body to be fitted into the frame body. The partition 23 may have side surfaces that extend in the longitudinal direction of the partition 23 and are each provided with a holding plate for holding the supply-air evaporative filter 22 and the exhaust-air evaporative filter 21.

The partition 23 has an upper surface facing the lower surface of the supply-air evaporative filter 22, and a lower surface facing the upper surface of the exhaust-air evaporative filter 21. The upper surface of the partition 23 has a groove formed along the longitudinal direction and located in a middle portion in the lateral direction. The upper surface slopes in a tapered manner so that the groove is the lowermost portion. The lower surface of the partition 23 has a plurality of cylindrical protrusions 231 protruding toward the exhaust-air evaporative filter 21. Each of the protrusions 231 has a communication hole 232 extending therethrough in the protruding direction. Each communication hole 232 communicates with the groove. Thus, the water that has passed through the supply-air evaporative filter 22 without evaporating is temporarily received by the upper surface of the partition 23, flows into the groove that is the lowermost portion, passes through the communication holes 232, and then falls in drops onto the exhaust-air evaporative filter 21. The groove may not be located in the middle portion of the partition 23 in the lateral direction, and may be offset toward one side surface of the partition 23. Further, the groove may be formed along the lateral direction.

Since the upper surface of the partition 23 slopes in a tapered manner so that the groove is the lowermost portion, the water falling in drops through the supply-air evaporative filter 22 is efficiently collected in the groove, and falls in drops from the communication holes 232, which communicate with the groove, onto the exhaust-air evaporative filter 21. The present embodiment shows, but is not limited to, the upper surface of the partition 23 slopes in a tapered manner. The upper surface may not slope.

The communication holes 232 each may have a diameter reduced from the lower surface of the partition 23 toward the exhaust-air evaporative filter 21. That is, the diameter of the communication hole 232 may be smaller at the distal end of the protrusion 231 than at the proximal end of the protrusion 231. As described above, the supply-air flow passage including the supply-air evaporative filter 22 is under positive pressure, and the exhaust air channel 32 including the exhaust-air evaporative filter 21 is under negative pressure. Therefore, a differential pressure is generated between the supply-air evaporative filter 22 and the exhaust-air evaporative filter 21. In contrast, sloping the upper surface of the partition 23 in a tapered manner and reducing the diameter of the communication hole 232 toward the exhaust-air evaporative filter 21 to form a tapered shape as a whole, increases the pressure loss in the flow of air from the supply-air evaporative filter 22 to the exhaust-air evaporative filter 21. Thus, even when a differential pressure is generated between the supply-air evaporative filter 22 and the exhaust-air evaporative filter 21 as described above, the pressure loss reduces the likelihood of supply air flowing from the supply-air evaporative filter 22 to the exhaust-air evaporative filter 21, thereby preventing a reduction in the overall amount of supply air to be supplied. The diameter of the communication hole 232 is required to be smaller than the dimensions of the lower surface of the supply-air evaporative filter 22, and the shape of the hole may be circular, elongated, rectangular, or similar.

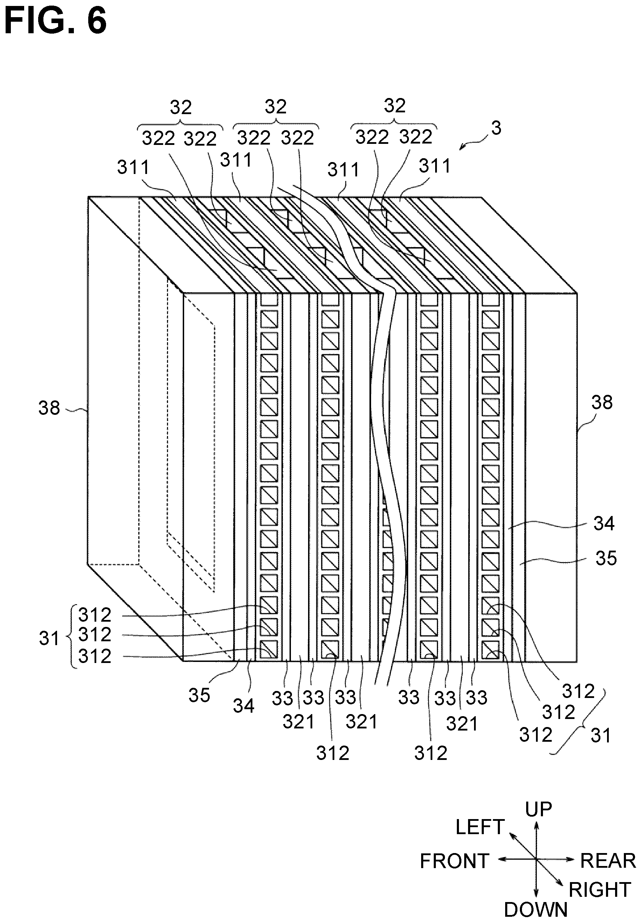

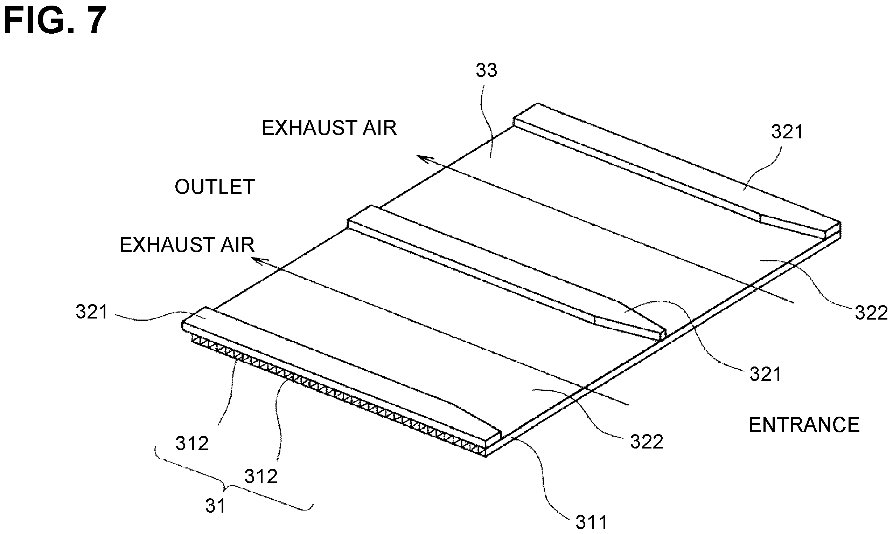

FIG. 6 is a schematic perspective view illustrating an example configuration of the sensible heat exchanger 3. FIG. 7 is a schematic perspective view illustrating an example configuration of a basic set including a channel member 311 and a plurality of spacers 321 disposed on one surface of the channel member 311. In FIG. 6, the middle portion of the sensible heat exchanger 3 in the stacking direction is omitted by wavy lines. The sensible heat exchanger 3 includes a plurality of supply air channels 31 and exhaust air channels 32, and has a stacked structure in which the supply air channels 31 and the exhaust air channels 32 are alternately stacked. Each of the supply air channels 31 is defined by a channel member 311, which is a rectangular resin plate having a hollow structure. The channel member 311 is formed from, for example, a plastic corrugated cardboard made from polypropylene.

The channel member 311 having a hollow structure defines a plurality of supply air passages 312, which extend therethrough in the left-right direction shown in the drawing, and which are arranged in parallel to each other in the up-down direction. That is, the extending directions of the plurality of supply air passages 312 in the channel member 311 are parallel to each other. Each of the supply air passages 312 has a rectangular cross section. Thus, a plurality of air supply passages 312 are formed in one channel member 311, thereby forming one air supply channel 31. Further, a plurality of the channel members 311 are stacked side by side in the front-rear direction shown in the drawing, thereby forming a plurality of the supply air channels 31.

The plurality of channel members 311 arranged in a stacked manner are each provided with a wetting member 33 on one surface facing an adjacent channel member 311. The wetting member 33 is formed from, for example, a nonwoven fabric, and is attached to one surface of the channel member 311. That is, for the adjacent channel members 311, when one surface of one channel member 311 and the other surface of the other channel member 311 face each other, the wetting member 33 is attached to each of the one surface and the other surface, which face each other. The wetting member 33 is not limited to the case where the wetting member 33 is attached to each of the surfaces of the adjacent channel members 311 facing toward each other, and the wetting member 33 may be attached to only one of the surfaces. Alternatively, the wetting member 33 may not be attached to one surface and the other surface of some of the channel members 311.

Each of the exhaust air channels 32 is constituted by a space formed by a spacer 321 located between the adjacent channel members 311. As described above, since the wetting members 33 such as nonwoven fabrics are attached to the surfaces of the adjacent channel members 311 facing toward each other, the spacer 321 is disposed between the wetting members 33 attached to the surfaces facing each other. The wetting member 33 may be provided with a cutout corresponding to a portion where the spacer 321 is disposed.

Width adjustment members 34 for adjusting the width of the sensible heat exchanger 3, which is the length thereof in the stacking direction, are attached to the outer surfaces of two channel members 311 that are located at opposite ends of the stacked channel members 311 in the stacking direction. The width adjusting members 34 each have a rectangular plate shape and are formed from, for example, a foam material. By forming the width adjusting members 34 using the foam material, the width adjusting members 34 function as heat insulating members. This reduces heat exchange between the sensible heat exchanger 3 and the ambient air, thus improving the efficiency of heat exchange within the sensible heat exchanger 3.

The width adjustment members 34 are each located such that one surface thereof faces the outer surface of the channel member 311. The width adjustment members 34 are formed such that one surface of the width adjustment member 34 and the outer surface of the channel member 311 are identical in shape and area. The two width adjustment members 34 located in this manner are positioned toward the front surface and the rear surface of the air conditioner 1, with the stacked channel members 311 and spacers 321 disposed between these two width adjustment members 34. By providing the width adjustment members 34. the width of the sensible heat exchanger 3 can be adjusted to a predetermined size, thus improving the flexibility of arrangement of the sensible heat exchanger 3 in the housing 11.

One surface of each of the width adjusting members 34 has a sealing material 35, which is, for example, spongy, attached to it. The sealing materials 35 each form a rectangular frame and are provided with four corners aligned with the four corners of the width adjusting members 34. The shape of the sealing materials 35 is not limited to a rectangular frame, and two L-shaped sealing materials or four rod-shaped sealing materials may be used. The sealing materials 35 are sandwiched by holding members 38 from the outside, whereby the sensible heat exchanger 3 is held by the holding members 38. The sensible heat exchanger 3 is held by the holding members 38 with the sealing materials 35 disposed therebetween, thereby preventing the generation of supply air and exhaust air flowing without passing through the sensible heat exchanger 3.

In the present embodiment, three spacers 321 are disposed between the adjacent channel members 311. Three spacers 321 have an elongated shape and are formed from a resin or a foam material that has higher rigidity than the resin forming the channel member 311. Each of the spacers 321 is disposed on the wetting member 33 attached to one surface of the channel member 311 such that the longitudinal direction of the spacer is along the flow direction of exhaust air, that is, the longitudinal direction of the spacer is parallel to the flow direction of exhaust air.

Among the three spacers 321, two spacers 321 are disposed on the opposite ends of the channel member 311 which correspond to the entrance to the supply air channel 31 and the outlet therefrom, and the remaining one spacer 321 is disposed in the middle portion of the channel member 311. The three spacers 321 are disposed such that the respective distances between the middle spacer 321 and the two end spacers 321 are the same. That is, these spacers 321 are disposed at equal intervals.

Each of the spacers 321 has a tapered end portion on the upstream side in the flow direction of exhaust air to increase in the width toward the flow direction of exhaust air. Each of the two end spacers 321 is tapered only on its inner side surface. The middle spacer 321 is tapered on two side surfaces. As described above, each of the spacers 321 has a tapered end portion on the upstream side in the flow direction of exhaust air to increase in the width toward the flow direction of exhaust air. Thus, the width of an exhaust air passage 322 defined by two adjacent spacers 321 decreases from the tapered end portion in the flow direction of exhaust air. That is, the width of the entrance to the exhaust air passage 322 in the flow direction of exhaust air can be widened, and the cross-sectional area of the exhaust air passage 322 can be gradually or stepwise reduced along the flow direction of exhaust air.

The spacers 321 are disposed on the wetting member 33 attached to one surface of the channel member 311, and thus the exhaust air passages 322 surrounded by the spacers 321 and the wetting member 33 are formed. That is, the facing side surfaces of the adjacent spacers 321 and the wetting member 33 attached to the facing surfaces constitute the inner surfaces of an exhaust air passages 322. As illustrated in the present embodiment, when three spacers 321 are arranged on one surface of the channel member 311, two exhaust air passages 322 are defined.

FIG. 7 illustrates a basic set including a channel member 311 and spacers 321 disposed on one surface of the channel member 311. The sensible heat exchanger 3 having a stacked structure is configured by stacking the basic sets so that the channel members 311 and the spacers 321 are alternately positioned. When three spacers 321 are disposed on one surface of the channel member 311, the number of the exhaust air passages 322 included in the sensible heat exchanger 3 is equal to the number obtained by multiplying the number of stacked basic sets by two. The number of spacers 321 disposed on one surface of the channel member 311 is not limited to three, and may be two or four or more. For example, the number of the spacers 321 may be two so that only one exhaust air passage 322 is formed.

The width of the exhaust air passages 322 may be larger than that of the supply air passages 312 in the stacking direction. Alternatively, the cross-sectional area of the exhaust air passages 322 may be larger than that of the supply air passages 312. By forming the exhaust air passages 322 such that the exhaust air passages 322 are wider than the supply air passages 312 or the cross-sectional area of the exhaust air passages 322 is larger than that of the supply air passages 312, the exhaust air passages 322 reduce the likelihood that water supplied from the filter water supply 24 stagnates in the middle of the exhaust air passages 322, which leads to blockages.

Since an inner surface of each exhaust air passage 322 is configured by the wetting member 33 such as a nonwoven fabric attached to one surface of the channel member 311, the water supplied from the filter water supply 24 is retained by the wetting member 33. As a result, the distribution density of water in contact with the exhaust air is improved. Therefore, the sensible heat exchange rate between water and the exhaust air passing through the exhaust air passages 322 is improved, and evaporation of water by the exhaust air is promoted, or both effects are achieved. As a result, the degree of cooling of the exhaust air by the water increases. The water retained in the wetting member 33 undergoes sensible heat exchange between exhaust air flowing through the exhaust air channels 32 and supply air flowing through the supply air channels 31, which form crossflow, in the sensible heat exchanger 3.

As described above, the spacers 321 have a tapered end portion, and thus the cross-sectional area at the entrance to the exhaust air passages 322 formed by the spacers 321 is increased. Therefore, the pressure loss when the exhaust air flows into the exhaust air passages 322 is reduced.

Since the rigidity of the spacers 321 is higher than that of the channel members 311, when the sensible heat exchanger 3 is disposed in the housing 11, the spacers 321 function as a strength member to prevent deformation of the sensible heat exchanger 3. While the channel members 311 have a hollow structure for forming the supply air passages 312, the spacers 321 may be formed of a solid body having no hollow structure. Alternatively, the resin serving as the material of the spacers 321 may be a material having higher rigidity than the rigidity of the resin serving as the material of the channel members 311. As a result, the rigidity of the spacers 321 may be higher than the rigidity of the channel members 311. The spacers 321 are solid bodies, but their characteristics are not limited this description. The spacers 321 may have a hollow structure while ensuring a value of rigidity required in design. The rigidities of the spacers 321 and the channel members 311 may be indicated by, for example, the Young's modulus. Since the rigidity of the spacers 321 is higher than the rigidity of the channel members 311, when the same stress is applied to the spacers 321 and the channel members 311 in the same direction, the amount of bending of the spacers 321 is smaller than that of the channel members 311.

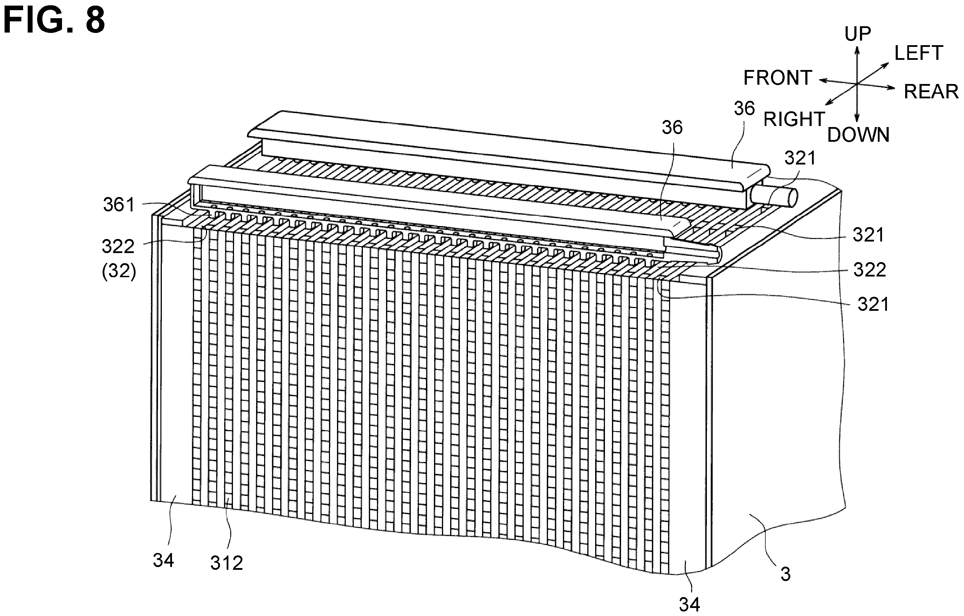

FIG. 8 is a schematic perspective view illustrating an example configuration of the arrangement between the exchanger water supplies 36 and the sensible heat exchanger 3. The exchanger water supplies 36 each have an elongated tubular shape. In the present embodiment, two exchanger water supplies 36 are arranged in parallel in a direction intersecting the stacking direction of the basic sets including the channel members 311 and the spacer 321. In this case, each of the exchanger water supplies 36 is arranged above the sensible heat exchanger 3 so that the longitudinal direction is along the stacking direction of the basic sets, that is, the longitudinal direction is parallel to the stacking direction. In the drawing of the present embodiment, the following description will be made based on the exchanger water supply 36 disposed in front and shown in a side sectional view to reveal the internal structure.

The inside of the exchanger water supply 36 having an elongated tubular shape forms a part of the supply water channel 9. The water conveyed by the water supply pump 91 flows into the exchanger water supply 36 through a tubular inlet portion formed in a side surface of the exchanger water supply 36. A plurality of nozzles 361 are formed at equal intervals along the longitudinal direction in the lower surface of the exchanger water supply 36. The plurality of nozzles 361 are formed corresponding to the respective exhaust air passages 322. The exchanger water supply 36 is disposed above the sensible heat exchanger 3 such that the nozzles 361 are located above at least half or more or all of the exhaust air passages 322. That is, the plurality of nozzles 361 are located such that the distance between the adjacent exhaust air passages 322 is the same as the distance between the adjacent nozzles 361. The lower ends of the nozzles 361 and the sensible heat exchanger 3 may be spaced from each other, or some of the lower ends of the nozzle 361 may be in the exhaust air passages 322. The water falling in drops through each of the nozzles 361 flows into the exhaust air passages 322 located immediately below the nozzles 361. Since the water falling in drops from the exchanger water supply 36 is distributed to the exhaust air passages 322 constituting the exhaust air channels 32 and then falls in drops inside the exhaust air passages 322, the surface area of the water in contact with the exhaust air is increased. The upper surface of the exchanger water supply 36 may have a flat plate shape, and the exhaust fan 51 may be disposed on the flat plate-shaped upper surface.

Since the exchanger water supply 36 is disposed above the sensible heat exchanger 3, the water falling in drops from the exchanger water supply 36 flows into the exhaust air passages 322 from the upper portion of the exhaust air passages 322, that is, the outlet for the exhaust air in the exhaust air passages 322. Thus, in the exhaust air passages 322 of the sensible heat exchanger 3, the flow direction of exhaust air flowing from bottom to top is opposite to a supply direction of water falling in drops from the exchanger water supply 36 from top to bottom. In the exhaust air passages 322 of the sensible heat exchanger 3, the flow direction of exhaust air and the supply direction of water from the exchanger water supply 36 may be parallel flow directions.

As described above, in the exhaust air channel 32 of the sensible heat exchanger 3, the water falling in drops from the exchanger water supply 36 and the exhaust air conveyed by the exhaust fan 51 create a counterflow in which the flow directions are opposite to each other. The water falling in drops above the exhaust channel 32 is evaporated by the exhaust air flowing into from below the exhaust channel 32, and the exhaust air is cooled by latent heat of evaporation of the water. The water falling in drops above the exhaust air channel 32 is water collected in the water supply tank 8, and the water temperature is lower than that of the exhaust air. Therefore, the exhaust air is also cooled by sensible heat exchange with water. The water that has passed through the exhaust air channel 32 without evaporating is received by the exchanger drain pan 37 located below the exhaust air channel 32. The water that has passed through the exhaust air channel 32 without evaporating is also cooled by latent heat of evaporation.

The cooled exhaust air exchanges sensible heat with the supply air flowing through the supply air channel 31, and then flows out from above the exhaust air channel 32. In the exhaust air channel 32, the supply direction of water supplied from the exchanger water supply 36 and the flow direction of exhaust air are set to be the countercurrent directions. This improves the relative velocity between the water and the exhaust air. As compared with the case where the exhaust air and the water flow in parallel, the relative velocity between the exhaust air and the water is increased, the evaporation efficiency of the water is improved, and the evaporation amount of the water per unit time is increased.

The following bulk equation indicates that the evaporation amount increases in proportion to the relative velocity between the exhaust air and the water when the conditions of the water temperature and the surface area of the water are equal. The amount of evaporation of water E is expressed by the bulk formula, E =ρCU (qSTA × T - qair) A, where E is the amount of evaporation of water [kg/s], ρ is air density [kg/m3], C is bulk coefficient [-], U is water-air relative velocity [m/s], qSTA is saturated specific humidity [-], qair is specific humidity [-], and A is water surface area [m2]. This indicates that the amount of evaporation of water (E) increases as the relative velocity (U) between water and air increases. Furthermore, for example, the well-known basic formula for thermal resistance (R = 1/hS) indicates that the thermal resistance due to sensible heat exchange decreases with increased relative velocity between water and air. Therefore, the thermal resistance in the sensible heat exchange between the water and the exhaust air in the exhaust air channels 32 of the sensible heat exchanger 3 decreases depending on the relative velocity between the water and the exhaust air. In the respective exhaust air channels 32, the supply direction of water supplied from the exchanger water supply 36 and the flow direction of exhaust air are set to be the countercurrent directions, and thus the amount of evaporation of water per unit time increases and the thermal resistance of the sensible heat exchange decreases. As a result, the efficiency of the cooling process for the exhaust air is improved. In this way, the cooling capacity of the air conditioner 1 is improved by cooling the supply air by using the exhaust air, which is cooled in two stages by water falling in drops from the exhaust-air evaporative filter 21 and the exhaust air channel 32.

As described above, the exhaust air for cooling the supply air in the sensible heat exchanger 3 is cooled in two stages including the primary cooling by the exhaust-air evaporative filter 21 and the secondary cooling by the water falling in drops from the exchanger water supply 36. Therefore, the temperature of the exhaust air is further lowered as compared with a method that uses, for example, only the water falling in drops from the exchanger water supply 36. By using the exhaust air cooled in this way, the supply air is more efficiently cooled in the sensible heat exchanger 3, and the cooling capacity of the air conditioner 1 is further improved.

Some of the water supplied to the sensible heat exchanger 3 and the evaporative filter unit 2 remains as liquid water without evaporating, and this remaining water is also cooled by heat of evaporation. The remaining water is collected in the water supply tank 8 through the common drain pan 6. By collecting the remaining water in this way, the temperature of the water stored in the water supply tank 8 is lowered and stabilized at a relatively low temperature.

As described above, the water stored in the water supply tank 8 is supplied to the sensible heat exchanger 3 and the evaporative filter unit 2. Therefore, since the water stored in the water supply tank 8 is stabilized at a low temperature, the cooling capacity of the sensible heat exchanger 3 and the evaporative filter unit 2 is improved. In other words, since the water cooled by heat of evaporation is reused, the cooling capacity of the air conditioner 1 is improved.

FIG. 9 is a block diagram illustrating functional components in the air conditioner 1. The supply fan 41, the exhaust fan 51, the first collection pump 71, the second collection pump 72, the water supply pump 91, the first flow rate sensor 711, and the second flow rate sensor 721, which are electrical components included in the air conditioner 1, are communicably connected to the controller 121 provided on the substrate 12 via communication lines.

The first flow rate sensor 711 and the second flow rate sensor 721 are, for example, impeller type or clamp-on type flow rate sensors, and output, to the controller 121, the detection results regarding the flow rate of the water flowing through the water collecting channel 7. The substrate 12 is populated with a microcomputer including a memory and an MPU. The microcomputer functions as the controller 121 that controls driving of the first collection pump 71, the second collection pump 72, the water supply pump 91, and other electrical components. The memory stores a program executed by the controller 121.

The power receiver 122 (refer to FIG. 1) that receives electric power supplied from the power supply unit C1 in the vehicle C is mounted on or connected to the substrate 12. Electric power is supplied to driven components such as the first collection pump 71, the second collection pump 72, and the water supply pump 91 via the power receiver 122. The controller 121 may control the supply and interruption of power from the power receiver 122 to the supply fan 41, the exhaust fan 51, the first collection pump 71, the second collection pump 72, and the water supply pump 91 to control the driving of these actuators.

The controller 121 checks whether the water supply pump 91, the first collection pump 71, and the second collection pump 72 are in normal operation or malfunctioning based on detection signals output from the first flow rate sensor 711 and the second flow rate sensor 721. That is, the controller 121 may function as an inspection unit that performs inspection such as an operation check of the water supply pump 91, the first collection pump 71, and the second collection pump 72.

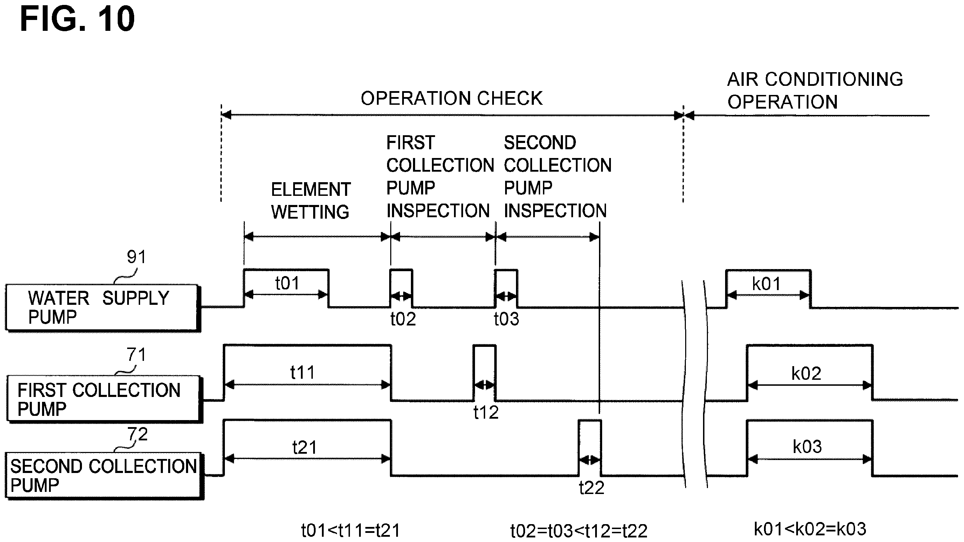

FIG. 10 is a timing chart in driving the pumps. The controller 121 checks the operations of the first collection pump 71, the second collection pump 72, and the water supply pump 91 when the air conditioner 1 is turned on by, for example, pressing the power switch of the air conditioner 1. Alternatively, the controller 121 may periodically check the operation after the air conditioner 1 is turned on and starts a normal air conditioning operation.

When the controller 121 determines that all of the first collection pump 71, the second collection pump 72, and the water supply pump 91 are in normal operation as a result of the operation check, the controller 121 starts an air conditioning operation for intermittently driving the first collection pump 71, the second collection pump 72, and the water supply pump 91. The controller 121 may stop the supply fan 41 and the exhaust fan 51 during the operation check. After the operation check, the controller 121 continuously drives the supply fan 41 and the exhaust fan 51 to start the air conditioning operation. The controller 121 may increase the volume of air moved by the supply fan 41 to exceed that by the air exhaust fan 51 during air conditioning operation. Increasing the volume of air moved by the supply fan 41 to exceed that by the exhaust fan 51 improve the comfort for the user of the air conditioner 1.

The operation check process includes an element wetting process of supplying water to the exhaust-air evaporative filter 21 and the supply-air evaporative filter 22, an inspection process for the first collection pump 71, and an inspection process for the second collection pump 72, and the controller 121 performs these processes in this order. In performing the element wetting process, the controller 121 drives the first collection pump 71, the second collection pump 72, and the water supply pump 91 in an overlapping manner.

The driving time t11 of the first collection pump 71 and the driving time t21 of the second collection pump 72 in the element wetting process may be the same. The driving time t01 of the water supply pump 91 in the element wetting process may be shorter than the driving time t11 of the first collection pump 71 and the driving time t21 of the second collection pump 72. That is, in the element wetting process, the water supply pump 91 starts operating after the first collection pump 71 and the second collection pump 72 and stops operating before the first collection pump 71 and the second collection pump 72.

As described above, the water supply pump 91 supplies water in the water supply tank 8 to the sensible heat exchanger 3 and the evaporative filter unit 2 via the exchanger water supplies 36 and the filter water supply 24, respectively, and the first collection pump 71 and the second collection pump 72 collect water accumulating in the common drain pan 6 into the water supply tank 8. Therefore, by performing the element wetting process, water permeates into the exhaust-air evaporative filter 21 and the supply-air evaporative filter 22. Therefore, in the inspection processes for the first collection pump 71 and the second collection pump 72 to be performed later, when the exhaust-air evaporative filter 21 and the supply-air evaporative filter 22 are supplied with water, water is prevented from retaining or accumulating in the exhaust-air evaporative filter 21 and the supply-air evaporative filter 22. The inspection accuracy is thus improved.

In the operation check process including the element wetting process, when the supply fan 41 and the exhaust fan 51 are stopped, the volume of air passing through the exhaust-air evaporative filter 21 and the supply-air evaporative filter 22 decreases. As a result, the evaporation efficiency of the exhaust-air evaporative filter 21 and the supply-air evaporative filter 22 is reduced, the water supplied to the exhaust-air evaporative filter 21 and the supply-air evaporative filter 22 is efficiently collected, and the inspection accuracy is improved.

In the element wetting process, the first collection pump 71 and the second collection pump 72 are driven before the water supply pump 91 and for a longer time than the water supply pump 91, so that the water accumulating upstream of the first collection pump 71 and the second collection pump 72 is reliably collected in the water supply tank 8. As a result, water is supplied to the exhaust-air evaporative filter 21 and the supply-air evaporative filter 22 in a state where no water accumulates upstream of the first collection pump 71 and the second collection pump 72.

After completion of the element wetting process, the controller 121 performs the inspection process for the first collection pump 71. In performing the inspection process for the first collection pump 71, the controller 121 starts driving the water supply pump 91. The controller 121 drives the first collection pump 71 after a predetermined period of time has elapsed since the drive of the water supply pump 91 was stopped. The driving time t02 of the water supply pump 91 in the inspection process for the first collection pump 71 may be shorter than the driving time 112 of the first collection pump 71.

When driving the first collection pump 71 in the inspection process for the first collection pump 71, the controller 121 determines whether the first collection pump 71 is in normal operation or malfunctioning based on the detection result received from the first flow rate sensor 711. The controller 121 stops the first collection pump 71 and ends the inspection process for the first collection pump 71.

When the detection result received from the first flow rate sensor 711 indicates that water is flowing in the water collecting channel 7 to which the first collection pump 71 is connected, the controller 121 determines that the first collection pump 71 is in normal operation. When the detection result indicates that water is not flowing in the water collecting channel 7, the controller 121 determines that the first collection pump 71 is malfunctioning. The determination of the presence or absence of the flow rate is not limited to cases where the flow rate is zero (0 mL/min), and may be made based on the discharge flow rate of the first collection pump 71. For example, when the detection result received from the first flow rate sensor 711 indicates that the flow rate is 30% or more of the discharge flow rate of the first collection pump 71, the controller 121 may determine that the first collection pump 71 is in normal operation.

After completion of the inspection process for the first collection pump 71, the controller 121 performs the inspection process for the second collection pump 72. In performing the inspection process for the second collection pump 72, the controller 121 starts driving the water supply pump 91. The controller 121 drives the second collection pump 72 after a predetermined period of time has elapsed since the drive of the water supply pump 91 was stopped.

The driving time t03 of the water supply pump 91 in the inspection process for the second collection pump 72 may be shorter than the driving time t22 of the second collection pump 72. The driving time t03 of the water supply pump 91 may be the same as the driving time t02 of the water supply pump 91 in the inspection process for the first collection pump 71. The driving time t22 of the second collection pump 72 may be the same as the driving time 112 of the first collection pump 71 in the inspection process for the first collection pump 71, i.e., t22 = t12.

When driving the second collection pump 72 in the inspection process for the second collection pump 72, the controller 121 determines whether the second collection pump 72 is in normal operation or malfunctioning based on the detection result received from the second flow rate sensor 721. The determination process of the second collection pump 72 is the same as the determination process of the first collection pump 71 described above. The controller 121 stops the second collection pump 72 and ends the inspection process for the second collection pump 72.

When the controller 121 determines that both the first collection pump 71 and the second collection pump 72 are in normal operation as a result of performing the inspection processes for the first collection pump 71 and the second collection pump 72, the controller 121 starts the air conditioning operation. When receiving the detection results indicating that the water is flowing through the water collecting channel 7 from the first flow rate sensor 711 and the second flow rate sensor 721 in this manner, the controller 121 can also determine that the water supply pump 91 is in normal operation. Therefore, when receiving the detection results indicating the presence of the flow rate from the first flow rate sensor 711 and the second flow rate sensor 721, the controller 121 determines that all of the first collection pump 71, the second collection pump 72, and the water supply pump 91 are in normal operation, and starts the air conditioning operation.

When starting the air conditioning operation, the controller 121 starts driving the water supply pump 91. After a predetermined period has elapsed, the controller 121 simultaneously starts driving the first collection pump 71 and the second collection pump 72 so as to overlap with driving the water supply pump 91. After stopping driving the water supply pump 91, the controller 121 stops driving the first collection pump 71 and the second collection pump 72. The controller 121 stops driving the first collection pump 71 and the second collection pump 72, and starts driving the water supply pump 91 after a predetermined period has elapsed. Thereafter, the controller 121 starts driving the first collection pump 71 and the second collection pump 72 in the same manner as described above. Thus, the first collection pump 71, the second collection pump 72, and the water supply pump 91 are intermittently driven, and the cooling capacity of the sensible heat exchanger 3 and the evaporative filter unit 2 is ensured while the sensible heat exchanger 3 and the evaporative filter unit 2 are prevented from being excessively supplied with water.

The driving time k01 of the water supply pump 91 in the air-conditioning operation may be shorter than the driving time k02 of the first collection pump 71 and the driving time k03 of the second collection pump 72. By lengthening the driving time of each of the first collection pump 71 and the second collection pump 72 beyond the driving time of the water supply pump 91, the water received by the common drain pan 6 is reliably collected to the water supply tank 8, to prevent the overflow of the water from the common drain pan 6.

When the controller 121 determines that one of the first collection pump 71 and the second collection pump 72 is malfunctioning as a result of performing the inspection processes for the first collection pump 71 and the second collection pump 72, the controller 121 may repeat a series of the inspection processes for the first collection pump 71 and the second collection pump 72 multiple times. Repeating the series of processes multiple times in this way eliminates the malfunctioning determination due to erroneous detection of the first flow rate sensor 711 or the second flow rate sensor 721.

The controller 121 repeats a series of the inspection processes for the first collection pump 71 and the second collection pump 72, for example, two or three times. When one of the first collection pump 71 and the second collection pump 72 is continuously determined as malfunctioning, the controller 121 may output, for example, an error code to a display such as an 8-segment display without starting the air conditioning operation, thereby notifying that the air conditioner 1 is faulty.

When determining that the second collection pump 72 is malfunctioning, the controller 121 may execute the inspection process for the first collection pump 71 determined to be in normal operation again. When the second collection pump 72 is malfunctioning, the water supplied from the water supply pump 91 is not collected to the water supply tank 8, and accumulates in the water collecting channel 7 and the common drain pan 6 upstream of the second collection pump 72. In contrast, the inspection process for the first collection pump 71 that has been determined to be in normal operation is performed again, whereby water accumulating in the common drain pan 6 can be collected to the water supply tank 8 and prevented from leaking from the common drain pan 6. When the first collection pump 71 is determined to be malfunctioning, the inspection process for the second collection pump 72, determined to be in normal operation, is executed. Therefore, water accumulating in the common drain pan 6 is collected to the water supply tank 8 in the same manner as described above, and the water is prevented from leaking from the common drain pan 6. In the case where the operations of the first collection pump 71 and the second collection pump 72 are alternately checked as described above, when one of the collection pumps is determined to be malfunctioning and the other collection pump is determined to be in normal operation, the collection pump determined to be in normal operation is driven last. Thus, the water received by the common drain pan 6 is surely collected to the water supply tank 8, and water leakage from the common drain pan 6 is prevented.

When the controller 121 determines that both the first collection pump 71 and the second collection pump 72 are malfunctioning as a result of performing the inspection processes for the first collection pump 71 and the second collection pump 72, the controller 121 determines that the water supply pump 91 is malfunctioning or there is no water in the water supply tank 8. In all the element wetting process, the inspection process for the first collection pump 71, and the inspection process for the second collection pump 72 included in the operation check process, the controller 121 controls the water supply pump 91 to be driven. In contrast, in the inspection processes for the first collection pump 71 and the second collection pump 72, when both the first flow rate sensor 711 and the second flow rate sensor 721 output the detection result indicating no flow rate, the evaporation filter unit 2 and the sensible heat exchanger 3 are not supplied with water from the water supply tank 8 and no water is received by the common drain pan 6. Therefore, water leakage from the common drain pan 6 does not occur. The controller 121, however, may output, for example, an error code to a display such as an 8-segment display without starting the air conditioning operation, thereby notifying that the air conditioner 1 is faulty or there is no water in the water supply tank 8.

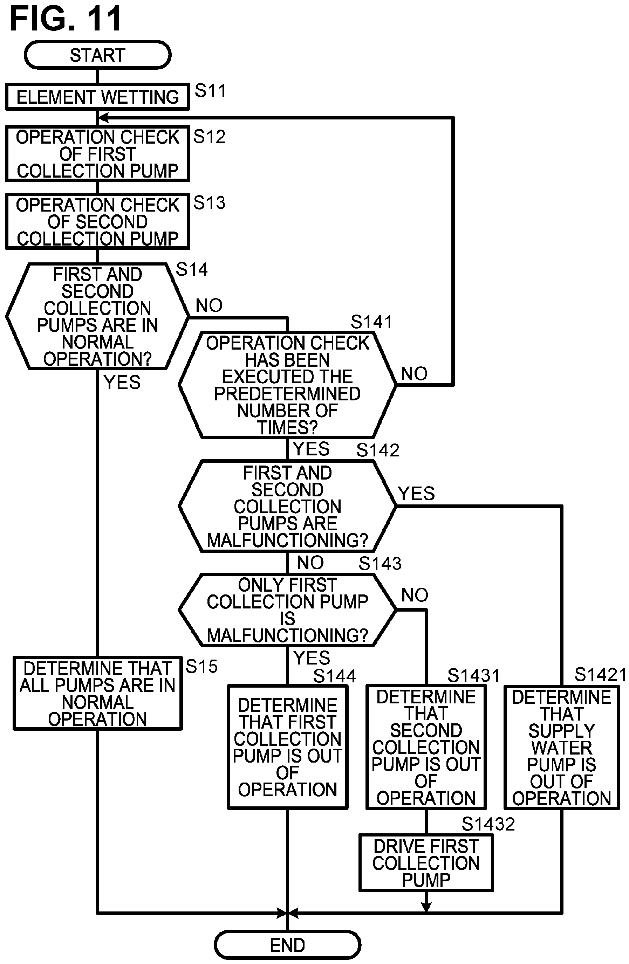

FIG. 11 is a flowchart showing steps to be performed by the controller 121 mounted on the substrate 12. When the air conditioner 1 is turned on by, for example, pressing the start button of the air conditioner 1, the controller 121 mounted on the substrate 12 performs the following operation check process as a preparation process before performing the air conditioning operation.

To start the operation check process, the controller 121 performs the above-described element wetting process (S 11). The controller 121 then checks the operation of the first collection pump 71 (S12), and further checks the operation of the second collection pump 72 (S13). When the controller 121 determines that each of the first collection pump 71 and the second collection pump 72 is in normal operation or malfunctioning, the controller 121 stores the results of the operation check of the first collection pump 71 and the second collection pump 72 in the memory.

The controller 121 determines whether both the first collection pump 71 and the second collection pump 72 are in normal operation (S14). The controller 121 determines whether both the first collection pump 71 and the second collection pump 72 are in normal operation based on the results of the operation check of the first collection pump 71 and the second collection pump 72 stored in the memory.

When both the first collection pump 71 and the second collection pump 72 are in normal operation (S14: YES), the controller 121 determines that all the pumps are in normal operation (S15). When both the first collection pump 71 and the second collection pump 72 are in normal operation, the controller 121 determines that not only the first collection pump 71 and the second collection pump 72 are in normal operation but also the water supply pump 91 is in normal operation. As a result, the controller 121 starts the air conditioning operation.

When at least one of the first collection pump 71 and the second collection pump 72 is malfunctioning (S14: NO), the controller 121 determines whether the operation check has been executed a predetermined number of times (S141). The predetermined number of times is stored in the memory in advance as, for example, four times. The controller 121 may count up the number of times of operation check by performing a series of the inspection processes for the first collection pump 71 and the second collection pump 72, and determine whether the operation check has been performed the predetermined number of times. When the operation check has not been executed the predetermined number of times (S141:NO), the controller 121 performs loop processing to execute the processing from step S12 again.

When the operation check has been executed the predetermined number of times (S141: YES), the controller 121 determines whether both the first collection pump 71 and the second collection pump 72 are malfunctioning (S142). When the operation check has been executed the predetermined number of times, it means that at least one of the first collection pump 71 and the second collection pump 72 is continuously determined to be malfunctioning. The controller 121 determines whether both the first collection pump 71 and the second collection pump 72 are malfunctioning.

When both the first collection pump 71 and the second collection pump 72 are malfunctioning (S142: YES), the controller 121 determines that the water supply pump 91 is out of operation or there is no water in the water supply tank 8 (S1421).

When one of the first collection pump 71 and the second collection pump 72 is malfunctioning (S142: NO), the controller 121 determines whether only the first collection pump 71 is malfunctioning (S143). The controller 121 refers to the operation check results of the first collection pump 71 and the second collection pump 72 stored in the memory, and determines whether only the first collection pump 71 is malfunctioning.

If only the first collection pump 71 is malfunctioning (S 143: YES), the controller 121 determines that the first collection pump 71 is out of operation (S144). When the first collection pump 71 is out of operation, the water received in the common drain pan 6 is not collected to the supply water tank 8 by performing the inspection process for the first collection pump 71 in step S12, but the water is collected to the supply water tank 8 by performing the operation check of the second collection pump 72 in step S13 after step S12. Therefore, the overflow of water from the common drain pan 6 is surely prevented.

If only the second collection pump 72 is malfunctioning (S143: NO), the controller 121 determines that the second collection pump 72 is out of operation (S1431). In this case, the controller 121 drives the first collection pump 71 determined to be in normal operation (S1432) and checks the operation of the second collection pump 72, thereby collecting the water received in the common drain pan 6 into the supply water tank 8. When driving the first collection pump 71, the controller 121 may check the operation of the first collection pump 71 again. After determining that the second collection pump 72 is out of operation, the controller 121 performs a post process for driving the first collection pump 71, thereby reliably preventing the overflow of water from the common drain pan 6.

In the present aspect, the air conditioner 1 includes the sensible heat exchanger 3 in which the exhaust air channel 32, through which the exhaust air flows, is supplied with water from the exchanger water supplies 36, and the exhaust-air evaporative filter 21, through which the exhaust air passes, is located upstream of the sensible heat exchanger 3. Since the exhaust-air evaporative filter 21 is supplied with water from the filter water supply 24, the exhaust air is once cooled through the exhaust-air evaporative filter 21, and then further cooled by water supplied from the exchanger water supplies 36 in the sensible heat exchanger 3, so that the exhaust air is cooled in two stages. Since the supply air flowing in the supply air channel 31 of the sensible heat exchanger 3 is cooled by the exhaust air cooled in two stages via the sensible heat exchanger 3, the cooling capacity of the air conditioner 1 can be improved.

In the present aspect, since the air conditioner 1 includes the supply-air evaporative filter 22 disposed downstream of the sensible heat exchanger 3 in the flow direction of supply air, the supply air is cooled by the exhaust air through the sensible heat exchanger 3 and then further cooled through the supply-air evaporative filter 22. By cooling the supply air in two stages in this way, the cooling capacity of the air conditioner 1 can be further improved.

In the present aspect, the air conditioner 1 includes the filter water supply 24 shared by the exhaust-air evaporative filter 21 and the supply-air evaporative filter 22. This shared use reduces the number of water supplies, which leads to a smaller size of the housing 11 of the air conditioner 1 due to space savings and lower component costs, as compared with an aspect in which individual water supplies are provided for the exhaust-air evaporative filter 21 and the supply-air evaporative filter 22. Since the exhaust-air evaporative filter 21 and the supply-air evaporative filter 22 are arranged in parallel along the supply direction of water supplied from the filter water supply 24, when water is supplied to both the exhaust-air evaporative filter 21 and the supply-air evaporative filter 22, water can be efficiently circulated between the exhaust-air evaporative filter 21 and the supply-air evaporative filter 22.

In the present aspect, the filter water supply 24 is located above the supply-air evaporative filter 22, and the exhaust-air evaporative filter 21 is located below the supply-air evaporative filter 22. That is, in the positional relationship among the filter water supply 24, the supply-air evaporative filter 22, and the exhaust-air evaporative filter 21, the filter water supply 24 is located at the highest position, the exhaust-air evaporative filter 21 is located at the lowest position, and the supply-air evaporative filter 22 and the exhaust-air evaporative filter 21 are arranged in a line in the vertical direction. As a result, the water supplied from the filter water supply 24 located at the highest position falls in drops onto the supply-air evaporative filter 22 located immediately below the filter water supply 24, and the water remaining without evaporating in the supply-air evaporative filter 22, that is, the water passing through the supply-air evaporative filter 22, falls in drops onto and is supplied to the exhaust-air evaporative filter 21 located immediately below the supply-air evaporative filter 22. Therefore, gravity can be used to cause water to flow from the supply-air evaporative filter 22 to the exhaust-air evaporative filter 21, thus improving the energy efficiency of the air conditioner 1.

In the present aspect, the exchanger water supplies 36 are provided with respect to the sensible heat exchanger 3 such that the direction of water supply from each of the exchanger water supplies 36 and the flow direction of exhaust air are opposite to each other in the exhaust air channel 32 of the sensible heat exchanger 3. This improves the heat exchange rate between the exhaust air and water from the exchanger water supplies 36, thereby cooling the exhaust air efficiently.

In the present aspect, the air conditioner 1 collects, in the common drain pan 6, water remaining without evaporating in the exhaust air channel 32 of the sensible heat exchanger 3 and passing through the exhaust air channel 32, and water remaining without evaporating in the exhaust-air evaporative filter 21 and passing through the exhaust-air evaporative filter 21, and supplies the collected water to the exchanger water supplies 36 and the filter water supply 24 by using the water supply pump 91. This allows the reuse of the water cooled by heat of evaporation, which leads to improvement the cooling capacity of the air conditioner 1.

In the present aspect, the water supply tank 8, which is to communicate with the water supply pump 91, is attachable to and detachable from the housing 11 of the air conditioner 1. When refilling the water supply tank 8, the user of the air conditioner 1 can bring only the water supply tank 8 to a tap, thereby reducing the workload involved in refilling with water.

In the present aspect, the air conditioner 1 includes the exchanger drain pan 37 and the filter drain pan 25 in addition to the common drain pan 6. The exchanger drain pan 37 and the filter drain pan 25 communicate with the shared drain pan 6 in which water received by the exchanger drain pan 37 and the filter drain pan 25 can be collected. By providing a plurality of drain pans in this way, the amount of water that can be received by the plurality of drain pans can be improved.

In the present aspect, since the exchanger drain pan 37 that is located between the sensible heat exchanger 3 and the exhaust-air evaporative filter 21 constitutes a part of the exhaust-air flow passage through which the exhaust air flows, the exhaust air passing through the exhaust-air flow passage constituted by the exchanger drain pan 37 is cooled by heat of evaporation and/or sensible heat of the water accumulating in the exchanger drain pan 37. Thus, the cooling capacity of the air conditioner 1 can be improved.

In the present aspect, the amount of water supplied per unit time by the exchanger water supply 36 is larger than that by the filter water supply 24. This increases the enthalpy of sensible heat of water undergoing heat exchange with the exhaust air in the exhaust air channel 32 of the sensible heat exchanger 3, thereby improving the amount of the exhaust air to be cooled. Thus, the cooling capacity of the air conditioner 1 can be improved.

In the present aspect, since the supply fan 41 is located upstream of the sensible heat exchanger 3 in the flow direction of supply air, the supply-air flow passage is maintained under positive pressure, and since the exhaust fan 51 is located downstream of the sensible heat exchanger 3 in the flow direction of exhaust air, the exhaust-air flow passage is maintained under negative pressure. Therefore, a differential pressure is generated between the supply-air flow passage and the exhaust-air flow passage. When the supply-air evaporative filter 22 disposed in the supply-air flow passage and the exhaust-air evaporative filter 21 disposed in the exhaust-air flow passage are arranged in parallel along the supply direction of water supplied from the filter water supply 24, water can be efficiently circulated from the supply-air evaporative filter 22 to the exhaust-air evaporative filter 21 by using the differential pressure between the supply-air flow passage and the exhaust-air flow passage.

In the present aspect, the volume of air moved by the supply fan 41 or the volumetric flow rate of the supply fan 41 is larger than the volume of air moved by the exhaust fan 51 or the volumetric flow rate of the exhaust fan 51, which leads to an increase of the volume of supply air and improvement of the comfort of the user of the air conditioner 1.

In the present aspect, the air conditioner 1 includes the sensible heat exchanger 3 including the supply air channel 31 and the exhaust air channel 32, and the evaporative filter unit 2. The evaporative filter unit 2 includes the supply-air evaporative filter 22 through which the supply air passes and the exhaust-air evaporative filter 21 through which the exhaust air passes. Therefore, since the supply air and the exhaust air, which undergo heat exchange in the sensible heat exchanger 3, are cooled by the supply-air evaporative filter 22 and the exhaust-air evaporative filter 21, respectively, the cooling capacity of the air conditioner 1 can be improved. Further, the single filter water supply 24 for supplying water to the evaporative filter unit 2 is shared by the supply-air evaporative filter 22 and the exhaust-air evaporative filter 21. This eliminates the need for providing individual water supplies for the supply-air evaporative filter 22 and the exhaust-air evaporative filter 21, and thus the number of components in the air conditioner 1 can be reduced, the product costs can be reduced, the product weight can be reduced, and the size of the housing 11 can be reduced, thereby saving space. In addition, the workload of the pump for supplying water to the filter water supply 24 can be reduced.

In the present aspect, the rigidity of the spacer 321 is higher than that of the channel member 311. In a case where the same stress is applied to the spacer 321 and the channel member 311 in the same direction, the amount of bending or deformation of the spacer 321 can be smaller than that of the channel member 311. Accordingly, even in a case where a member having relatively low rigidity such as a plastic corrugated fiberboard is used for the channel member 311, the rigidity of the sensible heat exchanger 3 can be improved by using the spacer 321 having higher or stronger rigidity than the channel member 311. This can prevent the deformation of the sensible heat exchanger 3 and reduce the occurrence of a gap between the sensible heat exchanger 3 and another portion when the sensible heat exchanger 3 is mounted on the air conditioner 1, that is, when the sensible heat exchanger 3 is attached inside the housing 11 of the air conditioner 1. However, such a gap may constitute a bypass path through which air flows without passing through the sensible heat exchanger 3, that is, a path detouring the sensible heat exchanger 3. Since the spacer 321 has higher or stronger rigidity than the channel member 311, the occurrence of a bypass path can be prevented or reduced, the amount of heat exchange between the exhaust air and the supply air in the sensible heat exchanger 3 can be improved, and the cooling capacity of the air conditioner 1 can be improved.

In the present aspect, the channel member 311 of the sensible heat exchanger 3 is formed in a plate shape having a hollow structure, and the plurality of spacers 321 constituting the exhaust air channels 32 are formed in an elongated shape, and are provided adjacent to the entrance to the supply air channels 31 and the outlet from the supply air channels 31 defined by the channel member 311 with the longitudinal direction intersecting the extending direction of the supply air channels 31. Accordingly, the inner surfaces of the exhaust air channels 32 are configured by one surface of the channel member 311, the other surface of another channel member 311 adjacent to the channel member 311, and the spacers 321 disposed between the one surface and the other surface. The spacers 321 having higher rigidity than the channel members 311 each function as a strength member and are located adjacent to the entrance to the supply air channels 31 and the outlet therefrom. This can prevent deformation of the sensible heat exchanger 3.

In the present aspect, the sensible heat exchanger 3 mounted on the air conditioner 1 includes the supply air channels 31 and the exhaust air channels 32, which form a stacked structure, and the spacers 321 constituting the exhaust air channels 32 have higher rigidity than the channel members 311 constituting the supply air channels 31. This can improve the rigidity of the sensible heat exchanger 3 in the stacking direction, and reduce the amount of bending when the sensible heat exchanger 3 is housed in the housing 11 of the air conditioner 1.

### Second Embodiment

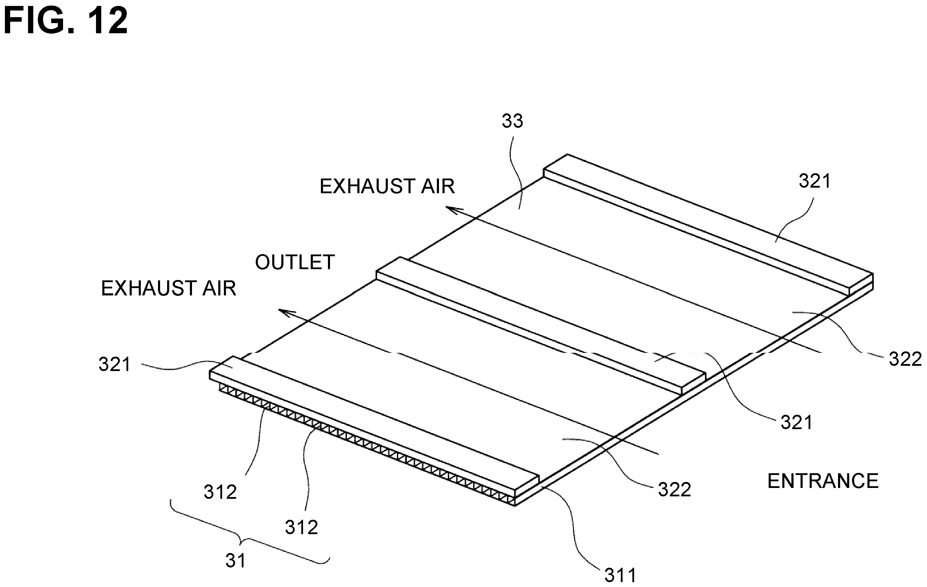

FIG. 12 is a schematic perspective view illustrating an example configuration of spacers 321 according to a second embodiment. The spacers 321 constituting the exhaust air passages 322 in the sensible heat exchanger 3 are arranged side by side on the wetting member 33 attached to one surface of a channel member 311 as in the first embodiment. In the present embodiment, the spacers 321 each have a rectangular shape with the same width, and have the same shape. By forming the spacers 321, which are arranged in parallel, in the same shape as described above, commonality of components in the spacers 321 and reduction in product costs can be achieved.

### Third Embodiment

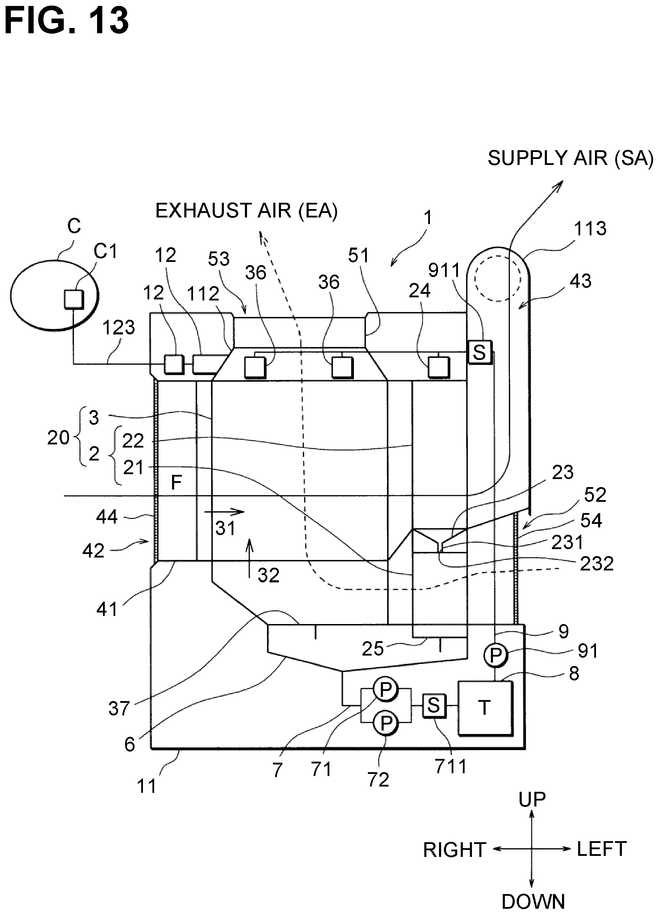

FIG. 13 is a schematic side sectional view illustrating an air conditioner 1 according to a third embodiment. The air conditioner 1 of the present embodiment includes an evaporative filter unit 2, a sensible heat exchanger 3, and other components, as in the air conditioner 1 of the first embodiment, and water received by a common drain pan 6 is collected to a water supply tank 8 via a water collecting channel 7.

Similarly to the first embodiment, the water collecting channel 7 forms a parallel circuit branching into two, and a first collection pump 71 and a second collection pump 72 are connected in parallel. The air conditioner 1 of the present embodiment does not include both a first flow rate sensor 711 and a second flow rate sensor 721 connected in series to the first collection pump 71 and the second collection pump 72, respectively, as in the first embodiment, but includes one of the flow rate sensors (a first flow rate sensor 711 in the present embodiment).

The first flow rate sensor 711 is provided in a portion of the water collecting channel 7 downstream of the parallel circuits in which the first collection pump 71 and the second collection pump 72 are provided, and detects the flow rate of water conveyed by the driving of both the first collection pump 71 and the second collection pump 72. A controller 121 of the air conditioner 1 drives either the first collection pump 71 or the second collection pump 72, and receives the detection result by the first flow rate sensor 711 at that time, thereby determining whether the driven collection pump is in normal operation or malfunctioning. In this way, by using the first flow rate sensor 711 shared by the first collection pump 71 and the second collection pump 72, the number of components is reduced, and a reduction in product weight and a reduction in product cost in the air conditioner 1 are achieved.

The air conditioner 1 of the present embodiment further includes a supply water flow rate sensor 911 provided in the supply water channel 9. The supply water flow rate sensor 911 may be provided upstream or downstream of the water supply pump 91 in the supply water channel 9. By providing the supply water flow rate sensor 911, the controller 121 of the air conditioner 1 receives the detection result from the supply water flow rate sensor 911 when the water supply pump 91 is driven, thereby determining whether the driven water supply pump 91 is in normal operation or malfunctioning.
The embodiments disclosed herein are to be illustrative and non-restrictive in all respects. The scope of the invention is indicated by the claims, not in the sense set forth above, and is intended to include all modifications within the meaning and scope of the claims and equivalents.

### Modifications

The present embodiments show, but are not limited to, that exhaust air passes through the space between the exchanger drain pan 37 and the sensible heat exchanger 3, that is, the exchanger drain pan 37 is located in the exhaust-air flow passage. The exchanger drain pan 37 may not be located in the exhaust-air flow passage.

The present embodiments show, but are not limited to, that, when one of the collection pumps is determined to be malfunctioning and the other one is determined to be in normal operation, the collection pump determined to be in normal operation is driven last. Even when one of the collection pumps is determined to be malfunctioning, the controller 121 may output, for example, an error code to a display such as an 8-segment display without driving the other collection pump without starting the air conditioning operation, thereby notifying that the air conditioner 1 is faulty.

The present embodiments show, but are not limited to, that the supply-air evaporative filter 22 and the exhaust-air evaporative filter 21 are configured as separate bodies. The supply-air evaporative filter 22 and the exhaust-air evaporative filter 21 may be integrated into a single evaporative filter. In this case, the single evaporative filter may be configured such that the upper region functions as the supply-air evaporative filter 22 by allowing supply air to pass therethrough, and the lower region functions as the exhaust-air evaporative filter 21 by allowing exhaust air to pass therethrough.

The present embodiments show, but are not limited to, that the supply-air evaporative filter 22 is located above the exhaust-air evaporative filter 21. The supply-air evaporative filter 22 may be located below the exhaust-air evaporative filter 21.

The present embodiments show, but are not limited to, that the supply-air evaporative filter 22 is located downstream of the outlet from the supply air channel 31 in the flow direction of supply air. The supply-air evaporative filter 22 may be located upstream of the entrance to the supply air channel 31.

The present embodiments show, but are not limited to, that the exhaust-air evaporative filter 21 is located upstream of the entrance to the exhaust air channel 32 in the flow direction of exhaust air. The exhaust-air evaporative filter 21 may be located downstream of the outlet from the exhaust air channel 32.

The present embodiments show, but are not limited to, that the air conditioner 1 includes the exchanger water supplies 36 that supply water to the sensible heat exchanger 3. The air conditioner 1 may not include the exchanger water supplies 36, and the sensible heat exchanger 3 may not be supplied with water.

The present embodiments show, but are not limited to, that the plurality of supply air passages 312 are formed in one channel member 311. One supply air passage 312 may be formed in one channel member 311.

The present embodiments show, but are not limited to, that the wetting members 33 are attached to one surface and the other surface of the channel members 311. The wetting members 33 may not be attached to the channel members 311.

The present embodiments show, but are not limited to, that the air conditioner includes the sensible heat exchanger 3 and the evaporative filter unit 2. That is, the air conditioner may include only one of the sensible heat exchanger 3 and the evaporative filter unit 2. In this case, the cooling unit 20 may include only one of the sensible heat exchanger 3 and the evaporative filter unit 2.

### Reference Signs List

C: vehicle, C 1: power supply unit, 1: air conditioner, 11: housing, 112: wall surface, 12: substrate, 121: controller, 122: power receiver, 20: cooling unit, 2: evaporative filter unit, 21: exhaust-air evaporative filter, 22: supply-air evaporative filter, 24: filter water supply, 25: filter drain pan, 3: sensible heat exchanger, 31: supply air channel, 32: exhaust channel, 36: exchanger water supply, 37: exchanger drain pan, 41: supply fan, 51: exhaust fan, 53: exhaust air outlet, 6: common drain pan, 71: first collection pump, 72:the second collection pump, 8: water supply tank, 91: water supply pump

## Claims

1. An air conditioner, comprising:
a sensible heat exchanger including a supply air channel and an exhaust air channel;
an exchanger water supply to supply water to the exhaust air channel of the sensible heat exchanger;
an exhaust-air evaporate filter for exhaust air to pass through, the exhaust-air evaporate filter being located upstream of the sensible heat exchanger in a flow direction of exhaust air flowing through the exhaust air channel of the sensible heat exchanger; and
a filter water supply to supply water to the exhaust-air evaporate filter.

2. The air conditioner according to claim 1, further comprising a supply-air evaporative filter for supply air to pass through, the supply-air evaporative filter being located downstream of the sensible heat exchanger in a flow direction of supply air flowing through the supply air channel of the sensible heat exchanger.

3. The air conditioner according to claim 2, wherein the exhaust-air evaporate filter and the supply-air evaporative filter are to share the filter water supply and are arranged in parallel along a supply direction of water supplied from the filter water supply.

4. The air conditioner according to claim 3, wherein
the supply-air evaporative filter is located downstream of the filter water supply in the supply direction of water supplied from the filter water supply, and
the exhaust-air evaporative filter is located downstream of the supply-air evaporative filter in the supply direction of water supplied from the filter water supply.

5. The air conditioner according to any one of claims 2 to 4, wherein
the supply-air evaporative filter is located above the exhaust-air evaporative filter, and
the filter water supply is located above the supply-air evaporative filter.

6. The air conditioner according to any one of claims 1 to 5, wherein
the exchanger water supply is provided with respect to the sensible heat exchanger such that a supply direction of water supplied from the exchanger water supply to the exhaust air channel is opposite to the flow direction of exhaust air flowing through the exhaust air channel.

7. The air conditioner according to any one of claims 1 to 6, further comprising an exhaust air outlet through which exhaust air is to be blown out of the air conditioner,
wherein the exchanger water supply is located between the exhaust air outlet and the sensible heat exchanger.

8. The air conditioner according to any one of claims 1 to 7, further comprising:
a common drain pan to be shared by the sensible heat exchanger and the exhaust-air evaporative filter to collect water passing through the exhaust air channel of the sensible heat exchanger and water passing through the exhaust-air evaporative filter; and
a water supply pump communicating with the common drain pan to supply water to the exchanger water supply and the filter water supply.

9. The air conditioner according to claim 8, further comprising a water supply tank communicating with the water supply pump, the water supply tank being detachable.

10. The air conditioner according to claim 9, further comprising a first collection pump communicating with the common drain pan and the water supply tank to collect water collected in the common drain pan to the water supply tank.

11. The air conditioner according to any one of claims 8 to 10, further comprising:
an exchanger drain pan to collect water passing through the exhaust air channel of the sensible heat exchanger; and
a filter drain pan to collect water passing through the exhaust-air evaporative filter,
wherein the exchanger drain pan and the filter drain pan communicate with the common drain pan.

12. The air conditioner according to claim 11, wherein the exchanger drain pan forms a part of an exhaust air flow passage for exhaust air to flow through.

13. The air conditioner according to any one of claims 1 to 12, wherein an amount of water supplied per unit time by the exchanger water supply is larger than that by the filter water supply.

14. The air conditioner according to any one of claims 1 to 13, further comprising:
a supply fan to convey supply air; and
an exhaust fan to convey exhaust air,
wherein the supply fan is located upstream of the sensible heat exchanger in a flow direction of supply air, and
wherein the exhaust fan is located downstream of the sensible heat exchanger in a flow direction of exhaust air.

15. The air conditioner according to claim 14, wherein a volume of air moved by the supply fan is larger than that by the exhaust fan.
